# EUROPÄISCHE PATENTSCHRIFT

(11) **EP 2 876 344 B1**
(45) Veröffentlichungstag und Bekanntmachung des Hinweises auf die Patenterteilung: **29.04.2020**
(21) Anmeldenummer: 14182570.3
(22) Anmeldetag: 28.08.2014
(51) Int. Cl.: F16L 33/025, F16L 33/03, F16L 33/04, F16L 33/08, F16L 33/23

(54) **Schellenanordnung zur Befestigung eines Schlauches auf einem Rohr oder Stutzen**
Clamp assembly for connecting a hose to a pipe or fitting
Collier de fixation de tuyau sur un tube ou manchon

(30) Priorität: 22.11.2013 DE 102013223965; 11.03.2014 DE 102014204456
(43) Veröffentlichungstag der Anmeldung: 27.05.2015
(73) Patentinhaber: ContiTech MGW GmbH, 34346 Hannoversch-Münden (DE)
(72) Erfinder: Brill, Hartmut, 37242 Bad Sooden-Allendorf (DE)
(74) Vertreter: Finger, Karsten

(56) Entgegenhaltungen:
- DE-C- 121 407
- DE-C1- 4 127 017
- US-A- 5 630 255
- US-A- 5 797 168

## Beschreibung

Die Erfindung betrifft eine Schellenanordnung zur Befestigung eines Schlauches auf einem Rohr oder Stutzen, umfassend eine Schelle mit einem ringförmigen Schellenband und einer Schellenbandspanneinheit, und ein koaxial in das Schellenband eingesetztes Einsatzteil, das als ringförmiges Band ausgebildet ist.

Die Erfindung betrifft außerdem eine Verbindungsanordnung, umfassend ein Rohr oder einen Stutzen mit einem Rohr- bzw. Stutzenendabschnitt und einen Schlauch mit einem Schlauchendabschnitt, wobei der Schlauchendabschnitt auf den Rohr- bzw. Stutzenendabschnitt aufgesteckt ist und mit der zuvor genannten Schellenanordnung befestigt ist.

Derartige Schellenanordnungen sind aus dem Stand der Technik bekannt. Bei der zugehörigen Schelle handelt es sich beispielsweise um eine Schneckengewindeschelle. Das zugehörige Schellenband ist vorzugswiese aus Metall. Es kann aber auch aus einem anderen geeigneten Material, wie Kunststoff, hergestellt sein. Das Schellenband ist ringförmig ausgestaltet, so dass es über den Schlauch geschoben werden kann, um diesen auf dem Rohr zu befestigen. Dazu werden die beiden Endabschnitte des Schellenbandes mittels der Schellenbandspanneinheit in entgegengesetzter Umfangsrichtung zueinander gezogen. Oftmals überlappen die Endabschnitte des Schellenbandes, wobei einer der beiden Endabschnitte zumeist fest mit der Schellenbandspanneinheit verbunden ist. So ist bei der zuvor genannten Schneckengewindeschelle ein Endabschnitt mit einem tunnelförmigen Gehäuse verbunden. Der andere Endabschnitt ist mit rippenartigen Gewindeabschnitten versehen und führt durch das Gehäuse. Die Gewindeabschnitte des Endabschnitts wirken mit einem Gewinde einer in das Gehäuse eingefassten Gewindeschraube zusammen, um einen Schelleninnendurchmesser durch ein Verdrehen der Gewindeschraube zu verkleinern oder zu vergrößern.

Ein koaxial in das Schellenband eingesetztes Einsatzteil, das als ringförmiges Band ausgebildet ist, ist aus dem Stand der Technik bekannt. Zu nennen ist hier beispielsweise das Dokument DE 198 06 235 A1. Das Band kann aus Metall, Kunststoff oder einem anderen geeigneten Material hergestellt sein. Dabei ist das Band derart gebogen, dass es einen Ring bildet. Die beiden Endabschnitte des Bandes können sich überlappen beziehungsweise aufeinander liegen. Das aus diesem Band gebildete Einsatzteil ist in das ringförmige Schellenband eingesetzt, wobei das Schellenband und das Einsatzteil eine gemeinsame Längsachse aufweisen. Bevorzugt sind das Schellenband und das Einsatzteil in Längsrichtung auch mittig zueinander angeordnet.

Beim Spannen des Schellenbandes durch die Schellenbandspanneinheit wird der Durchmesser des Schellenbandes verringert, so dass das Schellenband eine radiale Kraft auf das Einsatzteil ausübt. Das Einsatzteil dient wiederum dazu, eine radiale Kraft auf den Schlauch auszuüben, um diesen auf dem Rohr festzuklemmen. Durch ein Nachlassen der Elastizität des Schlauches - auch als Relaxieren des Schlauches bezeichnet - begründet durch die Viskoelastizität aller Elastomerwerkstoffe besteht die Gefahr, dass sich die radiale Kraft auf den Schlauch verringert. Damit verringert sich die Klemmkraft zwischen dem Schlauch und dem Rohr, so dass der Schlauch in einem ungünstigen Fall ungewollt von dem Rohr rutscht. Um ein wiederholtes manuelles Nachspannen mittels der Schellenbandspanneinheit zu vermeiden, ist aus der DE 198 06 235 A1 bekannt, das Einsatzteil mit von dem Einsatzteil radial nach innen ragenden Laschen zu versehen. Diese Laschen wirken unmittelbar federnd auf den Schlauch. Wenn der Schlauch wie zuvor erläutert an Elastizität verliert, verbleibt der Federdruck der Federn auf dem Schlauch.

In der Praxis wurde jedoch festgestellt, dass eine Ausgestaltung des Einsatzteils mit von diesem radial nach innen ragenden Laschen ein Nachspannen des Schellenbandes nicht ersetzt oder überflüssig macht. Indem die Laschen im Wesentlichen punktuell an Kontaktstellen auf den Schlauch drücken und die Bereiche des Schlauches zwischen den Kontaktstellen im Wesentlichen keiner oder einer deutlich geringeren radialen Kraft ausgesetzt sind, besteht die Gefahr, dass der Schlauch gegenüber dem Rohr nicht mehr abgedichtet ist. Denn in den Bereichen mit der deutlich geringeren radialen Kraft bzw. Klemmkraft ist die damit verursachte Dichtung nicht so stark bzw. so dicht, um den oftmals hohen Innendrücken in dem Schlauch beziehungsweise in dem Rohr standzuhalten. Infolgedessen entsteht eine ungewollte Leckage. Darüber hinaus kann ein korrekter Sitz des Schlauches auf dem Rohr gefährdet sein.

Aus der US 5,630,225 ist eine Schellenanordnung bekannt, die eine Schelle mit einem ringförmigen Schellenband und einer Schellenbandspanneinheit aufweist, wobei in das Schellenband ein Einsatzteil eingesetzt ist, das in seinem axial mittleren Bereich nach radial außen gerichtete Höcker aufweist. Zwischen zwei Höckern befindet sich jeweils eine Unterbrechung. Die nach radial außen gerichteten Höcker wirken als Federn, die über den Umfang des Schellenbandes verteilt und die in Radialrichtung federwirkend zwischen dem Schellenband und dem Einsatzteil angeordnet sind. An die radial nach außen gerichteten Höcker schließen sich in beide axiale Richtungen umlaufende Ränder des Einsatzteiles an, die nach radial innen gerichtete Wülste aufweisen.

Wenn die Schellenanordnung auf einen Schlauch aufgebracht wird, liegen die nach radial innen gerichteten Wülste auf der radial äußeren Oberfläche des Schlauches auf. Darüber hinaus liegen die nach radial außen gerichteten Höcker an der radial inneren Oberfläche des Schellenbandes an. Sobald das Schellenband mit Hilfe der Schellenbandspanneinheit gespannt wird, werden die Höcker nach radial innen gedrückt, so dass das Einsatzteil in radialer Richtung vorgespannt wird und die nach radial innen gerichteten Wülste auf die radial äußere Oberfläche des Schlauches gedrückt werden.

Die Wirkung der Höcker entspricht etwa der von Brücken zwischen den beiden Wülsten, die radial federn können und sich axial zwischen den Wülsten erstrecken. Bei Einfederung der Brücken, beispielsweise bei Ausdehnung des eingespannten Schlauches durch Hitze, werden diese zwar radial eingefedert, dabei aber in axialer Richtung auseinandergedrückt, sodass sich die beiden Wülste in axialer Richtung auseinander bewegen.

Da die federnden Elemente an dem Einsatzteil selbst angeordnet sind, stehen sie in direktem Kontakt mit der Oberfläche des eingespannten Schlauches. Die axiale Bewegung der Wülste führt also immer zu einer Wechselwirkung mit teilweiser Relativbewegung zwischen dem Einsatzteil mit den daran angeordneten Federelementen und der Oberfläche des Schlauches. Dies kann zu einer wechselnden Stauch- und Streckbelastung der eingespannten Schlauchoberfläche sowie gegebenenfalls zu einer Reibung zwischen den Wülsten und der Oberfläche des eingespannten Schlauches führen. Dadurch kann das Schlauchmaterial unerwünscht geschwächt werden.

Die Aufgabe der Erfindung ist die Bereitstellung einer Schellenanordnung zur Befestigung eines Schlauches auf einem Rohr bzw. einem Stutzen, die auch bei einem Relaxieren des Schlauches einen sicheren Sitz des Schlauches auf dem Rohr bzw. Stutzen und eine Dichtigkeit zwischen dem Schlauch und dem Rohr bzw. Stutzen ohne nennenswerte Relativbewegung zwischen Schellenanordnung und Schlauch gewährleistet.

Gemäß einem ersten Aspekt wird die Aufgabe durch die erfindungsgemäße Schellenanordnung zur Befestigung eines Schlauches auf einem Rohr oder Stutzen dadurch gelöst, dass mehrere Federn über einen Umfang des Schellenbandes verteilt sind, wobei die Federn radialwirkend sind und so angeordnet sind, dass sie zwischen dem Schellenband und dem Einsatzteil liegen und das Einsatzteil als ringförmiges Band ausgebildet ist, dessen Endabschnitte an einer Überlappungsstelle überlappen und nicht miteinander verbunden sind, so dass das ringförmige Band durch tangentiale Verschiebung seiner Endabschnitte an der Überlappungsstelle im Durchmesser veränderbar ist und so die Federkraft zwischen dem Schellenband und dem Einsatzteil zur Wirkung kommt.

Federn sind grundsätzlich aus dem Stand der Technik bekannt. Für die erfindungsgemäße Schellenanordnung werden bevorzugt Federn verwendet, die eine kompakte Bauform aufweisen. Vorzugsweise werden für die Schellenanordnung vier, fünf, sechs, sieben, acht oder mehr Federn verwendet. Die Federn sind zwischen dem Schellenband und dem Einsatzteil angeordnet, wobei die Federn jeweils in einer Radialrichtung wirken. Da das Schellenband und das Einsatzteil koaxial zueinander ausgerichtet sind, weisen diese in der Regel eine gemeinsame Radialrichtung auf. Die Federn sind also jeweils in der Weise angeordnet, dass zumindest ein Teil Ihrer Federkraft - also der Federwirkung - in Radialrichtung wirkt. Unter mehreren über den Umfang des Schellenbandes verteilte Federn sind deshalb mehrere voneinander getrennte Federn zu verstehen, die jeweils ein gewisses Bogenmaß an Abstand zueinander aufweisen. Entsprechende Kraftübertragungsstellen der Federn sind ebenfalls voneinander beabstandet.

Wie eingangs erläutert, dient die Schellenanordnung zur Befestigung eines Schlauches auf einem Rohr oder Stutzen. Aufgrund von Temperatureinwirkungen und bzw. oder einer Alterung kann es bei dem Schlauch zu einer Verringerung der Elastizität kommen. Auch tritt bei Elastomerwerkstoffen ein Druckverformungsrest auf. Mit anderen Worten kann ein Relaxieren des Schlauches auftreten. Damit nimmt die radiale Materialstärke des Schlauches ab. Der Außendurchmesser des Schlauches verringert sich, so dass es bei bekannten Schellenanordnungen zu einer Undichtigkeit oder zu einer geringeren Spannkraft zwischen dem Schlauch und dem Rohr bzw. Stutzen kommt. Um diese negativen Effekte zu kompensieren, drücken die Federn mit einer Federkraft, die aufgrund der erfindungsgemäßen Anordnung einer zuvor eingestellten, radialen Spannkraft entspricht, radial außenseitig auf das Einsatzteil. Verringert sich nun der Außendurchmesser des Schlauches aufgrund des genannten Relaxierens, passt sich das Einsatzteil dem verringerten Außendurchmesser des Schlauches kontinuierlich an. Die Federn drücken also in der Weise auf das Einsatzteil, dass sich der Durchmesser des Einsatzteils ebenfalls verringert. Dadurch, dass die Enden des ringförmigen Bandes überlappen und nicht miteinander verbunden sind, ist das ringförmige Band durch tangentiale Verschiebung seiner Enden an der Überlappungsstelle im Durchmesser veränderbar, so dass das Auftreten einer Relativbewegung zwischen Schlauch und Schellenanordnung minimiert ist. Es kommt also zu einem kontinuierlichen Nachspannen des Schlauches auf dem Rohr bzw. Stutzen. Indem die Federn über den Umfang des Schellenbands verteilt angeordnet sind und nicht direkt auf den Schlauch, sondern auf das Einsatzteil drücken, erfährt der Schlauch eine über den Umfang des Schlauches betrachtete annähernd gleichmäßige Spannkraft. Die annähernd gleichmäßige Spannkraft ändert sich auch nicht bei dem Relaxieren des Schlauches. Diese annähernd gleichmäßige Spannkraft sowie das kontinuierliche Nachspannen bewirken, dass eine sich zwischen dem Schlauch und dem Rohr bzw. Stutzen ausbildende Dichtung besonders hohen Drücken standhalten kann, selbst bei einer Verringerung des Außendurchmessers des Schlauches nach der erstmaligen Montage. Die erfindungsgemäße Schellenanordnung kann dabei auf alle bekannten Verfahren für Vorpositionierung von Schellen angewendet werden.

Eine vorteilhafte Ausgestaltung der Schellenanordnung zeichnet sich dadurch aus, dass die Federn gleichmäßig über den Umfang des Schellenbands verteilt angeordnet sind. Durch die gleichmäßige Verteilung der Federn über den Umfang wird gewährleistet, dass die Krafteinwirkung radial außenseitig auf das Einsatzteil in gleichmäßig voneinander beanstandeten Stellen erfolgt. Nach einer Montage der Schellenanordnung ist das Einsatzteil radial innenseitig flächig mit dem Schlauch in Kontakt. Somit werden die Kräfte von den Federn durch das Einsatzteil über den Umfang des Einsatzteils kontinuierlich auf den Schlauch übertragen. Mit anderen Worten handelt es sich hierbei um eine ringflächenförmige Krafteinwirkung auf den Schlauch. Das Einsatzteil dient also zur Umwandlung der stellenartigen Krafteinwirkung der Federn in eine annähernd gleichmäßige ringflächenförmige Krafteinwirkung auf den Schlauch. Je höher die Anzahl der Federn und bzw. oder je gleichmäßiger die Federn über den Umfang des Schellenbands verteilt angeordnet sind, desto gleichmäßiger ist auch die ringflächenförmige Krafteinwirkung auf den Schlauch.

Eine weitere vorteilhafte Ausgestaltung der Schellenanordnung zeichnet sich dadurch aus, dass die Federn jeweils einen Ringraum durchquerend ausgestaltet sind, der zwischen dem Schellenband und den Einsatzteil ausgebildet ist. Der Ringraum zwischen dem Schellenband und dem Einsatzteil bietet die Möglichkeit, dass eine radiale, von dem Schellenband ausgehende Spannkraft auf die Federn und bzw. oder das Einsatzteil einstellbar ist. Wird bei der Montage der Stellenanordnung das Stellenband mittels der Schellenbandspanneinheit auf einen ersten Wert gespannt, so kann in einem weiteren Schritt die Spannung des Schellenbands durch Anpassung des Ringraums genauer eingestellt werden, insbesondere vergrößert oder verkleinert werden. Außerdem bietet der Ringraum nach der Montage der Schellenanordnung die Möglichkeit, dass sich die Federn durch ein Relaxieren des Schlauches ausdehnen, so dass das Einsatzteil einer entsprechenden Durchmesserverringerung folgen kann.

Eine weitere vorteilhafte Ausgestaltung der Schellenanordnung zeichnet sich dadurch aus, dass das Schellenband und bzw. oder das Einsatzteil aus Metall, insbesondere aus Federstahl sind. Metalle eignen sich für das Schellenband und bzw. oder das Einsatzteil besonders vorteilhaft, da sie für gewöhnlich eine hohe Zugsteifigkeit und bzw. oder eine hohe Biegesteifigkeit aufweisen. Insbesondere die hohe Biegesteifigkeit ist von Vorteil, da die Federn in Radialrichtung des Schellenbandes bzw. des Einsatzteil wirken. Die entsprechenden Federkräfte rufen bei einer entsprechend hohen Biegesteifigkeit nur eine sehr geringe Verbiegung in Radialrichtung auf. Vielmehr wird die einwirkende Federkraft flächig auf die Bereiche neben der Federkrafteinwirkungsstelle verteilt. Bei dem Einsatzteil kann die Federkraft über eine entsprechende Fläche auf den Schlauch verteilt werden. Grundsätzlich können für das Schellenband und bzw. oder das Einsatzteil auch andere Materialien vorgesehen sein, die ähnliche oder gleiche Eigenschaften bieten.

Eine weitere vorteilhafte Ausgestaltung der Schellenanordnung zeichnet sich dadurch aus, dass die Federn zumindest teilweise von dem Schellenband gebildet sind. Das Schellenband kann somit jeweils ein Teil der Feder oder die gesamte Feder bilden. Ferner ist es möglich, dass das Schellenband einen Teil der Menge der Federn bildet. Das Schellenband und die jeweiligen Federn - bzw. ein Teil davon - bilden sodann eine integrale Einheit. So können die Federn beispielsweise durch Ausstanzungen und bzw. oder Ausbiegungen gebildet sein. Dies ist für die Herstellung besonders günstig, da auf weitere Verbindungsschritte, insbesondere für eine stoffschlüssige, kraftschlüssige oder formschlüssige Verbindung zwischen den Federn und dem Schellenband verzichtet werden kann.

Eine weitere vorteilhafte Ausgestaltung der Schellenanordnung zeichnet sich dadurch aus, dass die Federn durch schräg zur Radialrichtung von dem Schellenband nach innen ragende Laschen gebildet sind. Die Radialrichtung wird hierbei vorzugsweise durch das Schellenband und bzw. oder das Einsatzteil bestimmt. Die Laschen sind radial innenseitig zu dem Schellenband angeordnet. Die Laschen haben Federeigenschaften. Sofern die Federn bzw. die Laschen von dem Schellenband gebildet sind, ist ein Übergang von einem ringförmigen Bereich des Schellenbands zu der jeweiligen Feder bzw. der Lasche kontinuierlich. Die Laschen können dabei spitzwinkelig zu der Radialrichtung ausgerichtet sein. Die Laschen zeichnen sich vorteilhaft durch ihre kompakte Bauform aus. Somit kann ein Ringraum zwischen dem Schellenband und dem Einsatzteil besonders klein ausgestaltet sein.

Eine weitere vorteilhafte Ausgestaltung der Schellenanordnung zeichnet sich dadurch aus, dass die Federn zumindest teilweise von dem Einsatzteil gebildet sind. Das Einsatzteil kann somit jeweils ein Teil der Feder oder die gesamten Feder bilden. Ferner ist es möglich, dass das Einsatzteil einen Teil der Menge der Federn bildet. Das Einsatzteil und die jeweiligen Federn - bzw. ein Teil davon - bilden sodann eine integrale Einheit. So können die Federn beispielsweise durch Ausstanzungen und bzw. oder Ausbiegungen gebildet sein. Dies ist für die Herstellung besonders günstig, da auf weitere Verbindungsschritte, insbesondere für eine stoffschlüssige, kraftschlüssige oder formschlüssige Verbindung zwischen den Federn und dem Einsatzteil verzichtet werden kann. Grundsätzlich kann es vorgesehen sein, dass eine Teilmenge der Federn von dem Einsatzteil und eine übrige Teilmenge der Federn von dem Schellenband gebildet sind. Insbesondere können die Federn über den Umfang abwechselnd von dem Schellenband und dem Einsatzteil gebildet sein. Sofern die Federn von dem Schellenband und dem Einsatzteil gebildet sind, gelten die zuvor und im weiteren genannten Merkmale und Vorteile jeweils sinngemäß für die jeweilige Ausgestaltung. Kombinationen der Merkmale und Vorteile sind aufgrund der möglichen, abwechselnden Bildung der Federn ebenfalls vorgesehen.

Eine weitere vorteilhafte Ausgestaltung der Schellenanordnung zeichnet sich dadurch aus, dass die Federn durch schräg zur Radialrichtung von dem Einsatzteil nach außen ragende Laschen gebildet sind. Die Radialrichtung wird hierbei vorzugsweise durch das Schellenband und bzw. oder das Einsatzteil bestimmt. Die Laschen sind radial außenseitig zu dem Einsatzteil angeordnet. Die Laschen haben Federeigenschaften. Sofern die Federn bzw. die Laschen von dem Einsatzteil gebildet sind, ist ein Übergang von einem ringförmigen Bereich des Einsatzteils zu der jeweiligen Feder bzw. der Lasche kontinuierlich. Die Laschen können dabei spitzwinkelig zu der Radialrichtung ausgerichtet sein. Die Laschen zeichnen sich wie bereits erläutert vorteilhaft durch ihre kompakte Bauform aus.

Eine weitere vorteilhafte Ausgestaltung der Schellenanordnung zeichnet sich dadurch aus, dass die Laschen jeweils durch eine Ausstanzung und bzw. oder Ausbiegung gebildet sind. Wenn im Weiteren von Eigenschaften der Laschen gesprochen werden, sind damit insbesondere auch die dem Schellenband und bzw. oder dem Einsatzteil zugehörigen Laschen gemeint. Ein Bilden der Laschen durch Ausstanzungen und bzw. oder Ausbiegungen zeichnet sich durch eine besonders einfache und günstige Herstellung aus. Außerdem bedürfen derartige Laschen keiner nachträglichen Anbindung an das Schellenband bzw. an das Einsatzteil. Vielmehr sind die Laschen jeweils ein integraler Teil des Schellenbandes bzw. des Einsatzteil. Außerdem können die Laschen in den jeweils durch die Ausstanzungen und bzw. oder Ausbiegungen geschaffenen Raum zurück federn, so dass bei besonders hohen Anforderungen an die radial Spannkraft ein Ringraum zwischen dem Schellenband und dem Einsatzteil auf ein Minimum reduziert werden kann. Mit anderen Worten verursachen derartige Laschen trotz ihrer Federwirkung zwischen dem Schellenband und dem Einsatzteil keinen übermäßig großen Raumbedarf. Insgesamt ist die Schellenanordnung somit kompakt und einfach herstellbar. Der durch die Ausstanzungen und bzw. oder Ausbiegungen geschaffene Raum des Einsatzteils bietet zudem eine Axialsicherung der Schellenanordnung. Denn beim Spannen des Schlauchs kann ein radial außenseitiger Teil des Schlauchs in den genannten Raum des Einsatzteils hineinragen. Dieser Teil des Schlauchs verhindert, dass die Schellenanordnung in Axialrichtung von dem Schlauch herunterrutscht.

Eine weitere vorteilhafte Ausgestaltung der Schellenanordnung zeichnet sich dadurch aus, dass die Federn durch von dem Schellenband radial nach innen gewölbte Laschen gebildet sind. Gewölbte Laschen lassen sich besonders günstig und einfach durch Ausbiegungen herstellen. Außerdem kann eine gewölbte Lasche eine stetige Kontur mit einer vorzugsweise flachen Kontaktfläche bieten, so dass ein Kontakt zu dem Einsatzteil nicht punkt- oder linienförmig, sondern eher flächenförmig ist. Die entsprechende Kontaktfläche kann vergrößert werden, indem die Kontur eines in Längsrichtung betrachteten, mittleren Abschnitts der Lasche an die Außenkontur bzw. den Außenradius des Einsatzteils angepasst ist. Aber auch schon kleinere Anpassungen einer jeweiligen Lasche, wie beispielsweise ein Trapezquerschnitt oder ein wellenförmiger Querschnitt, erhöhen die Kontaktfläche zwischen der Lasche und dem Einsatzteil, was die Übertragung der Federkraft auf eine größere Kontaktfläche verteilt und somit vergleichmäßigt. Deshalb können durch derartige Laschen höhere Federkräfte auf das Einsatzteil beziehungsweise den Schlauch aufgebracht werden, ohne mit stark radial punktuellen Krafteinwirkungen auf das Einsatzteil beziehungsweise den Schlauch rechnen zu müssen.

Eine weitere vorteilhafte Ausgestaltung der Schellenanordnung zeichnet sich dadurch aus, dass die Federn durch von dem Einsatzteil radial nach außen gewölbte Laschen gebildet sind. Diese Ausgestaltung bietet die analogen Vorteile, wie sie zu der vorherigen Ausgestaltung erläutert wurden. Somit lassen sich auch mit diesen Laschen besonders flächige Kontaktbereiche zwischen der Lasche und dem Schellenband erreichen.

Eine weitere vorteilhafte Ausgestaltung der Schellenanordnung zeichnet sich dadurch aus, dass jede Lasche mit einem Endabschnitt mit dem Schellenband bzw. dem Einsatzteil verbunden ist. Bei den Laschen handelt es sich vorzugsweise um die Laschen, die jeweils mit genau einem Endabschnitt oder einer Seite mit dem Schellenband bzw. dem Einsatzteil verbunden sind. Die übrigen Endabschnitte oder Seiten der jeweiligen Lasche sind vorzugsweise als verbindungsfreie Kanten ausbildet. Die Verbindung der jeweiligen Lasche zu dem Schellenband bzw. dem Einsatzteil kann kontinuierlich sein. So kann die Lasche beispielsweise durch Stanzung oder Biegung hergestellt sein. Aber auch andere Verbindungsverfahren, wie Verschweißen, Verkleben, etc., können vorgesehen sein.

Eine weitere vorteilhafte Ausgestaltung der Schellenanordnung zeichnet sich dadurch aus, dass die Laschen jeweils axial mittig aus dem Schellenband und bzw. oder dem Einsatzteil gestanzt und bzw. oder gebogen sind. Die Bezeichnung "axial mittig" kann in diesem Zusammenhang weit ausgelegt werden. So kann darunter die Mitte in Axialrichtung des Schellenbands beziehungsweise des Einsatzteils verstanden werden. Bevorzugt kann unter der Bezeichnung aber auch verstanden werden, dass die Laschen zwischen zwei jeweils stirnseitig ausgebildeten Ringbereichen angeordnet sind. Die stirnseitigen Bereiche des Schellenbandes bzw. des Einsatzteil sind somit frei von Unterbrechungen. Diese stirnseitigen Bereiche können also unterbrechungsfreie Ringbereiche bilden. Die Ringbereiche des Schellenbands verleihen dem Schellenband eine besonders hohe Zugsteifigkeit. Trotz der Ausstanzungen und bzw. oder Ausbiegungen eignet sich das Schellenband deshalb zum hervorrufen von hohen radialen Spannkräften. Die Ringbereiche des Einsatzteils ermöglichen eine stetige und bzw. oder kontinuierliche radial Krafteinwirkung auf den Schlauch. Die Ringbereiche des Einsatzteils tragen somit zur verbesserten Dichtigkeit zwischen dem Schlauch und dem Rohr bei.

Eine weitere vorteilhafte Ausgestaltung der Schellenanordnung zeichnet sich dadurch aus, dass jede Lasche mit zwei einander gegenüber angeordneten Endabschnitten mit dem Schellenband bzw. dem Einsatzteil verbunden ist. Die übrigen Endabschnitte oder Seiten der jeweiligen Lasche sind vorzugsweise als verbindungsfreie Kanten ausbildet. Eine Federkraft einer derartigen Lasche setzt sich aus zwei Kraftkomponenten zusammen. Eine erste Kraftkomponente der jeweiligen Lasche ist auf ein Verbiegen der Lasche zurückzuführen. Wird die Lasche beispielsweise um eine Längsachse des Schellenbands elastisch verbogen, entsteht eine Rückstellkraft, die zu der ersten Kraftkomponente korrespondiert. Eine zweite Kraftkomponente der jeweiligen Lasche ist auf ein Verstauchen der Lasche zurückzuführen. Ein derartiges Verstauchen der Lasche tritt auf, wenn die Lasche entsprechend ihrer Federwirkung in Radialrichtung des Schellenbands bzw. des Einsatzteils zusammengedrückt wird. Damit wird die Wölbung der Lasche flacher. Wäre die Lasche nicht mit ihren zwei Endabschnitten mit dem Schellenband bzw. dem Einsatzteil verbunden, würde sich ein direkter Abstand zwischen den beiden Endabschnitten der Lasche vergrößern. Indem die beiden Endabschnitte der Lasche mit dem Schellenband oder dem Einsatzteil verbunden sind, wird die Lasche jedoch daran gehindert, den direkten Abstand zwischen den beiden Endabschnitten zu vergrößern. Deshalb wird die Lasche zwischen den beiden Endabschnitte gestaucht, wenn die Lasche - wie zuvor erläutert - in Radialrichtung des Schellenbands und/oder Einsatzteils zusammengedrückt wird. Mit dem Stauchen der Lasche entsteht in der Lasche eine Druckspannung, die zu der zuvor genannten, zweiten Kraftkomponente korrespondiert. Deshalb ist es mit derartigen Laschen möglich, eine Schellenanordnung mit hohen Federkräften bei einem besonders kleinen Bauraum zu erreichen.

Durch die Druckspannung in der jeweiligen Lasche wirken an den Verbindungsstellen der Lasche zu dem Schellenband und/oder dem Einsatzteil entsprechende Druckkräfte auf das Schellenband und/oder das Einsatzteil. Erfindungsgemäß sind das Schellenband und das Einsatzteil ringförmig. Somit ist der Abschnitt zwischen den zuvor genannten zwei Verbindungsstellen einer entsprechenden Zugspannung ausgesetzt. Durch eine geeignete Wahl der Zugsteifigkeit und/oder des Materials des Schellenbands bzw. des Einsatzteils, kann eine Dehnung in Umfangsrichtung bei einer zu erwartenden Zugspannung eingestellt werden. Somit ist es möglich, dass die Lasche bei einer maximal zu erwartenden Zugspannung vollständig in einen Bereich zwischen den Verbindungen zu dem Schellenband bzw. dem Einsatzteil einfedert. Dies gewährleistet eine besonders kompakte Bauform der Schellenanordnung.

Eine weitere vorteilhafte Ausgestaltung der Schellenanordnung zeichnet sich dadurch aus, dass zwei benachbarte Federn oder Laschen in Umfangsrichtung des Schellenbands oder des Einsatzteils versetzt und in Axialrichtung des Schellenbands beziehungsweise des Einsatzteils überlappend angeordnet sind. Vorzugsweise werden für die Schellenanordnung vier, fünf, sechs, sieben, acht oder mehr Federn verwendet. Diese Federn können auf einem gemeinsamen Ringsegment des Schellenbands beziehungsweise des Einsatzteils hintereinander verteilt angeordnet sein. Sie weisen jeweils in Umfangsrichtung einen bestimmten Abstand auf. Dieser Abstand zwischen den Federn entspricht bei bekannten Schellenanordnungen auch einem minimalen Abstand zwischen den Kontaktstellen zweier benachbarten Federn zum Schellenband oder Einsatzteil. Korrespondierend zu den Kontaktstellen und ihrem jeweiligen Abstand voneinander verhält sich auch die Verteilung der von den Federn auf das Einsatzteil beziehungsweise das Schellenband ausgeübten Spannkraft. Um eine gleichmäßigere Verteilung der von den Federn bzw. Laschen auf das Einsatzteil oder das Schellenband auszuübenden Spannkraft zu erreichen, ist es bevorzugt vorgesehen, die Federn oder Laschen dichter aneinander zu platzieren. Dies wird erreicht, in dem jeweils zwei benachbarte Federn oder Laschen in Umfangsrichtung des Schellenbands beziehungsweise des Einsatzteils versetzt und in Axialrichtung des Schellenbands beziehungsweise des Einsatzteils überlappend angeordnet sind. Zumindest zwei Federn oder Laschen können somit parallel zueinander angeordnet werden. Außerdem kann damit gewährleistet werden, dass in Umfangsrichtung betrachtet ein Kontakt einer der Federn oder Laschen zu dem Einsatzteil beziehungsweise Schellenband beginnt, bevor ein Kontakt der anderen, benachbarten Feder oder Lasche zu dem Einsatzteil oder Schellenband endet. Bezüglich eines (Kreis-) Bogenabschnitts des Einsatzteils oder Schellenbands können also gleichzeitig zwei Federn oder Laschen federnden Kontakt zu dem Einsatzteil beziehungsweise Schellenband aufweisen. Die beiden Federn oder Laschen überlappen sich also in Axialrichtung des Einsatzteils oder Schellenbands. Somit kann ein Abstand zwischen den Kontaktstellen zweier benachbarten Laschen minimiert werden. Mit diesem minimierten Abstand der Kontaktstellen entsteht in Umfangsrichtung des Einsatzteils oder Schellenbands ein Pfad mit annähernd gleichmäßiger auf das Einsatzteil beziehungsweise Schellenband einprägbaren Spannkraft. Diese annähernd gleichmäßige Spannkraft sowie das kontinuierliche Nachspannen bewirken, dass eine sich zwischen dem Schlauch und dem Rohr bzw. dem Stutzen ausbildende Dichtung besonders hohen Drücken standhalten kann, selbst bei einer Verringerung des Außendurchmessers des Schlauches nach der erstmaligen Montage. Die erfindungsgemäße Schellenanordnung kann dabei auf alle bekannten Verfahren für Vorpositionierung von Schellen angewendet werden.

Eine vorteilhafte Ausgestaltung der Schellenanordnung zeichnet sich dadurch aus, dass die jeweils zwei benachbarten Laschen in Axialrichtung des Schellenbands oder des Einsatzteils benachbart sind. Vorzugsweise handelt es sich also jeweils um zwei in Axialrichtung des Schellenbands oder Einsatzteils benachbarte Laschen. Diese Laschen können somit besonders einfach in Axialrichtung des Schellenbands oder Einsatzteils überlappend angeordnet sein. Mit einem Überlappen in Axialrichtung ist deshalb bevorzugt gemeint, dass die zugehörigen beiden Laschen jeweils einen Abschnitt aufweisen, der in dem gleichen (Kreis-) Bogenabschnitt des Schellenbands oder Einsatzteils angeordnet ist. Indem die beiden Laschen zueinander benachbart sind, kann verhindert werden, dass sie sich überlagern. Vielmehr können sie in Axialrichtung des Schellenbands oder Einsatzteils voneinander beanstandet sein, so dass die beiden Laschen in Umfangsrichtung versetzt zueinander sind. Eine derartige Anordnung der Laschen bietet die Möglichkeit, einen quasi kontinuierlichen Kontakt zwischen einer Mehrzahl von Laschen und dem Einsatzteil oder Schellenband herzustellen. Denn der axiale Abstand zwischen den Laschen kann entsprechend klein gewählt werden.

Eine weitere vorteilhafte Ausgestaltung der Schellenanordnung zeichnet sich dadurch aus, dass ein minimaler Abstand von zwei in Axialrichtung überlappenden Laschen kleiner als ein Viertel, insbesondere kleiner als ein Fünftel, einer mittleren Breite des Schellenbands oder des Einsatzteils ist. Je kleiner der Abstand zwischen den in Axialrichtung überlappenden Laschen gewählt wird, desto gleichmäßiger erfolgt die Übertragung der Spannkraft. Grundsätzlich können zwei in Axialrichtung benachbarte Laschen aneinander grenzen oder durch einen Schlitz voneinander getrennt sein. In der Praxis hat sich jedoch bewährt, einen bestimmten Abstand zwischen zwei in Axialrichtung überlappenden Laschen vorzusehen, um eine ausreichende oder bestimmte Zugsteifigkeit, Drucksteifigkeit und/oder Verdrehsteifigkeit des Schellenbands oder des Einsatzteils zu gewährleisten. Ein größerer Abstand zwischen zwei in Axialrichtung überlappenden Laschen würde zwar die zuvor genannten Steifigkeiten erhöhen, jedoch auch zur Verschlechterung der gleichmäßigen Übertragung der Spannkraft von den Laschen auf das Schellenband oder das Einsatzteil führen. Um eine besonders gute, gleichmäßige Übertragung der Spannkraft zu erreichen, ist es deshalb bevorzugt vorgesehen, dass der minimale Abstand zwischen den beiden Laschen kleiner als ein Viertel oder ein Fünftel der mittleren Breite des Schellenbands oder des Einsatzteils ist.

Eine weitere vorteilhafte Ausgestaltung der Schellenanordnung zeichnet sich dadurch aus, dass sich zwischen zwei in Axialrichtung überlappenden Laschen ein von dem Schellenband oder Einsatzteil ausgebildeter Steg erstreckt. Wie eingangs erläutert, werden die beiden Endabschnitte des Schellenbands mittels der Schellenbandspanneinheit in entgegengesetzter Umfangsrichtung zueinander gezogen, um einen Schelleninnendurchmesser durch ein Verdrehen der Gewindeschraube der Schellenbandspanneinheit zu verkleinern. Mit dem Verringern des Innendurchmessers des Schellenbands wird dieses zugleich gespannt, so dass das Schellenband eine radiale Kraft auf das Einsatzteil ausübt. Hierdurch verringert sich auch der Durchmesser des Einsatzteils. Je nach Einsatzzweck können die Kräfte in Umfangsrichtung des Schellenbands und/oder des Einsatzteils unterschiedlich hoch sein. Bei einer hohen Beanspruchung ist es deshalb vorteilhaft, wenn zwischen den Laschen ein vom Schellenband oder dem Einsatzteil ausgebildeter Steg vorhanden ist. Dieser Steg trägt vorteilhaft dazu bei, dass das Schellenband oder das Einsatzteil entsprechend hohen Kräften in Umfangsrichtung ausgesetzt werden kann.

Eine weitere vorteilhafte Ausgestaltung der Schellenanordnung zeichnet sich dadurch aus, dass jede Lasche eine Längsachse aufweist, die sich zwischen den Endabschnitten der jeweiligen Lasche erstreckt, und jede der Längsachsen schräg zu einer Umfangsrichtung des Schellenbands und/oder des Einsatzteils ausgerichtet ist. Eine derartige Ausrichtung der Laschen bzw. ihrer jeweiligen Längsachse bietet die Möglichkeit, jeweils zwei in Axialrichtung des Schellenbands und/oder des Einsatzteils benachbarte Laschen in Umfangsrichtung des Schellenbands und/oder des Einsatzteils versetzt und in Axialrichtung des Schellenbands und/oder des Einsatzteils überlappend anzuordnen. Wären die Laschen beispielsweise auf einem Ringabschnitt des Schellenbands und/oder des Einsatzteils (direkt) hintereinander angeordnet, wobei jede der Längsachsen parallel zu der Umfangsrichtung des Schellenbands und/oder des Einsatzteils angeordnet ist, würde diese Möglichkeit nicht bestehen. Mit dieser vorteilhaften Ausgestaltung der Erfindung können die Laschen also in Axialrichtung und/oder Umfangsrichtung des Schellenbands und/oder des Einsatzteils zumindest abschnittsweise unmittelbar nebeneinander oder parallel zueinander angeordnet sein, so dass eine Überlappung der Laschen erreicht werden kann.

Eine weitere vorteilhafte Ausgestaltung der Schellenanordnung zeichnet sich dadurch aus, dass jede der Laschen zwei Außenkanten aufweist, die sich jeweils zwischen ihren Endabschnitten erstrecken. An den Endabschnitten ist die jeweilige Lasche mit dem Schellenband und/oder dem Einsatzteil verbunden. Wird die jeweilige Lasche bei der Montage der Schellenanordnung in Radialrichtung zusammengedrückt, erfährt die Lasche zumindest in einer Richtung, die sich zwischen den Endabschnitt erstreckt, eine Stauchung. Eine entsprechende Federkraftkomponente entsteht. Um eine ungleichmäßige Federsteifigkeit der jeweiligen Lasche zu verhindern, sind die Außenkanten nicht mit dem Schellenband und/oder dem Einsatzteil verbunden. Sie können in diesem Fall auch keinen ungewollten Einfluss auf ein Federverhalten der jeweiligen Lasche haben.

Eine weitere vorteilhafte Ausgestaltung der Schellenanordnung zeichnet sich dadurch aus, dass zumindest eine der Außenkanten einer jeden Lasche tailliert ist. Eine Taillierung der Lasche bietet eine Möglichkeit, die Federsteifigkeit der jeweiligen Lasche konstruktiv zu beeinflussen. Die jeweilige Lasche kann damit über ihre Längsrichtung und/oder Querrichtung hinweg eine gleichmäßige oder bestimmte Steifigkeit aufweisen.

Eine weitere vorteilhafte Ausgestaltung der Schellenanordnung zeichnet sich dadurch aus, dass eine Federkennlinie einer jeden Lasche degressiv ist. Eine degressive Federkennlinie zeichnet sich dadurch aus, dass die Federkraft unterproportional im Verhältnis zu einer Verformung der Feder bzw. eines Verformungswegs der Feder steigt. Eine Lasche mit einer degressiven Federkennlinie eignet sich besonders vorteilhaft zum Ausgleich von Temperaturschwankungen. Denn ab einer bestimmten Verformung bzw. ab einem bestimmten Verformungsweg weist die Federkennlinie nur noch einen verringerten Gradienten auf. Verformt sich der Schlauch und/oder das Schellenband und/oder das Einsatzteil aufgrund von Temperaturschwankungen, was zu einer entsprechenden Durchmesserveränderung führt, und sind die Laschen derart verformt, dass sich die Federkennlinie in dem Bereich mit dem zuvor genannten, verringerten Gradienten aufhält, ist ein entsprechender Einfluss der Durchmesserveränderungen auf die Federkraft gering. Die Federkraft auf das Einsatzteil oder das Schellenband bleibt also trotz der Temperaturschwankungen annähernd gleich bzw. konstant. Eine Lasche mit einer degressiven Federkennlinie weist beispielsweise einen wellenförmigen Querschnitt auf und/oder ist entlang mindestens einer ihrer Außenkanten tailliert ausgestaltet.

Eine weitere vorteilhafte Ausgestaltung der Schellenanordnung zeichnet sich dadurch aus, dass eine Federkennlinie einer jeden Lasche progressiv ist. Eine progressive Federkennlinie zeichnet sich dadurch aus, dass die Federkraft überproportional im Verhältnis zu einer Verformung der Feder bzw. eines Verformungswegs der Feder steigt. Laschen mit progressiven Federkennlinie eignen sich vorteilhaft, um besonders hohe Federkräfte auf das Einsatzteil oder das Schellenband auszuüben. Bereits bei kleineren Verformungen der jeweiligen Lasche treten überproportional große Federkräfte auf. Derartige Laschen eignen sich vorzugsweise für eine Anwendung bei Einsatzteilen, die die Federkraft besonders gleichmäßig auf den Schlauch übertragen können. Eine Lasche mit einer progressiven Federkennlinie weist beispielsweise einen trapezförmigen Querschnitt auf.

Eine weitere vorteilhafte Ausgestaltung der Schellenanordnung zeichnet sich dadurch aus, dass das Schellenband oder das Einsatzteil zu jeder Stirnseite von einem ununterbrochenen Ringabschnitt gebildet ist. Da diese Ringabschnitte dazu beitragen, dass Kräfte in Umfangsrichtung übertragen werden können und das Schellenband oder das Einsatzteil somit gespannt werden kann, um den Innendurchmesser des Schellenbands beziehungsweise des Einsatzteils zu verringern, hat es sich als vorteilhaft erwiesen, die stirnseitigen Ringabschnitte ununterbrochen auszugestalten. Die Laschen können im Bereich zwischen den stirnseitigen Ringabschnitten angeordnet sein.

Eine weitere vorteilhafte Ausgestaltung der Schellenanordnung zeichnet sich dadurch aus, dass jede der Außenkanten einer Lasche einer der Ringabschnitte zugewandt und von diesem, insbesondere durch einen Schlitz, beabstandet ist. Vorzugsweise erstrecken sich die Außenkanten jeweils zwischen den Endabschnitt einer Lasche. Deshalb können die Außenkanten frei beweglich sein, denn die Anbindung der Laschen erfolgt über die Endabschnitte. Indem die Außenkanten einer Lasche bevorzugt einem der Ringabschnitte zugewandt sind, kann gewährleistet werden, dass die Ringabschnitte von einer zusätzlichen, unmittelbaren Belastung durch eine direkte Verbindung zu den Laschen befreit sind. Mit anderen Worten wird mit dieser Ausgestaltung der Schellenanordnung erreicht, die Ringabschnitte frei von einer Anbindung einer Lasche zu halten.

Eine weitere vorteilhafte Ausgestaltung der Schellenanordnung zeichnet sich dadurch aus, dass die Laschen in Umfangsrichtung, insbesondere periodisch, den gleichen Zeigesinn aufweisen. Bei den Laschen handelt es sich vorzugsweise um die Laschen, die jeweils mit einem Endabschnitt mit dem Schellenband bzw. dem Einsatzteil verbunden sind. Die übrigen Endabschnitte der jeweiligen Lasche sind vorzugsweise als verbindungsfreie Kanten ausbildet. Mit dem Zeigesinn ist vorzugsweise die Ausrichtung der jeweiligen Lasche zu einer angrenzenden Mantelfläche des Schellenbandes oder des Einsatzteils oder zu einer auf die Lasche weisende Radialrichtung gemeint. Beispielsweise weisen die jeweiligen Laschen einen zumindest im Wesentlichen gleichen Winkel zu der jeweiligen Radialrichtung auf. Mit anderen Worten sind die jeweiligen Laschen beispielsweise im oder gegen den Uhrzeigersinn zu einer angrenzenden Innenfläche des Schellenband bzw. des Einsatzteils angewinkelt angeordnet. Ein gleicher bzw. gemeinsamer Zeigersinn der Laschen bietet den Vorteil, dass eine Veränderung des Durchmessers des Schellenband oder des Einsatzteils ohne eine hohe Reibung zwischen den Federn und dem Schellenband bzw. des Einsatzteils erfolgen kann. Vielmehr kann eine Durchmesserveränderung eine entsprechende, relative Drehbewegung zwischen dem Schellenband und dem Einsatzteil hervorrufen, die zumindest im Wesentlichen reibungsfrei ist.

Eine weitere vorteilhafte Ausgestaltung der Schellenanordnung zeichnet sich dadurch aus, dass jeweils zwei benachbarte Laschen zu einer Gruppe gruppiert sind, und die Laschen der jeweiligen Gruppe zueinander zeigen. Bei den Laschen handelt es sich vorzugsweise um die Laschen, die jeweils mit einem Endabschnitt mit dem Schellenband bzw. dem Einsatzteil verbunden sind. Die übrigen Endabschnitte der jeweiligen Lasche sind vorzugsweise als verbindungsfreie Kanten ausbildet. Eine derartige Gruppierung der Laschen verhindert die zuvor erläuterte, relative Drehbewegung. Somit kann gewährleistet werden, dass eine Position der Schellenbandspanneinheit über den Umfang der Schellenanordnung betrachtet erhalten bleibt, selbst wenn es zu einem Relaxieren des Schlauches kommt. Diese Ausgestaltung ist insbesondere dann vorteilhaft, wenn ein Bauraum für die Schellenanordnung besonders begrenzt ist, und insbesondere die Ausrichtung der Schellenbandspanneinheit erhalten bleiben soll.

Eine weitere vorteilhafte Ausgestaltung der Schellenanordnung zeichnet sich dadurch aus, dass die Laschen rechteckförmig, U-förmig, parabelförmig oder dreieckförmig ausgestaltet sind. Je nach Anwendungsfall kann es vorgesehen sein, dass der Querschnitt des Einsatzteils rechteckförmig, U-förmig, parabelförmig oder dreieckförmig ausgestaltet ist. Um eine möglichst flächige Krafteinwirkung durch die Laschen auf das Einsatzteil zu ermöglichen, ist es vorteilhaft vorgesehen, dass die Laschen korrespondierend zu einem radial außenseitigen Querschnitt des Einsatzteils ausgebildet sind. Insbesondere haben sich rechteckförmige, U-förmige, parabelförmige oder dreieckförmige Ausgestaltungen der Laschen als vorteilhaft erwiesen.

Eine weitere vorteilhafte Ausgestaltung der Schellenanordnung zeichnet sich dadurch aus, dass die Laschen jeweils flach oder gewölbt ausgestaltet sind. Flache Laschen können besonders einfach und kostengünstig durch Ausstanzungen hergestellt werden. Gewölbte Laschen lassen sich besonders günstig und einfach durch Ausbiegungen herstellen.

Gemäß einem weiteren Aspekt wird die eingangs genannte Aufgabe außerdem durch eine erfindungsgemäße Verbindungsanordnung geöst, umfassend ein Rohr oder einen Stutzen mit einem Rohr- bzw. Stutzen endabschnitt und ein Schlauch mit einem Schlauchendabschnitt, wobei der Schlauchendabschnitt auf den Rohr- bzw. Stutzen endabschnitt aufgesteckt ist, und wobei der Schlauchendabschnitt mittels der erfindungsgemäßen Schellenanordnung kraftschlüssig auf dem Rohr- bzw. Stutzen endabschnitt befestigt ist. Dabei gelten Merkmale, Details und Vorteile, die im Zusammenhang mit der erfindungsgemäßen Schellenanordnung beschrieben sind, selbstverständlich auch im Zusammenhang mit der erfindungsgemäßen Verbindungsanordnung und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Schnittdarstellung der erfindungsgemäßen Schellenanordnung,

- Fig. 2: ein Diagramm zur Verdeutlichung eines Spannkraftabfalls über die Zeit bei einer bekannten Schellenanordnung aus dem Stand der Technik,
- Fig. 3: einen schematischen Ausschnitt einer erfindungsgemäßen Verbindungsanordnung in einem Vormontagezustand,
- Fig. 4: einen schematischen Ausschnitt der Verbindungsanordnung in einem Montagezustand,
- Fig. 5: einen schematischen Ausschnitt der Verbindungsanordnung in einem Relaxierzustand,
- Fig. 6: einen schematischen Ausschnitt der Schellenanordnung mit an dem Einsatzteil ausgebildeten Laschen,
- Fig. 7: einen schematischen Ausschnitt einer weiteren Verbindungsanordnung in einem Vormontagezustand,
- Fig. 8: einen schematischen Ausschnitt der Verbindungsanordnung aus Fig. 7 in einem Montagezustand,
- Fig. 9 a-d: mehrere schematische Draufsichten auf ein ausgebreitetes Schellenband mit jeweils unterschiedlichen Laschen bzw. Ausstanzungen,
- Fig. 10: einen schematischen Ausschnitt der Schelle mit einer schräg zum Schellenband ausgestalteten Lasche,
- Fig. 11: einen schematischen Ausschnitt der Schelle mit zwei gruppierten, zueinander zeigenden, flachen Laschen,
- Fig. 12: einen schematischen Ausschnitt der Schelle mit zwei gruppierten, zueinander zeigenden, gewölbten Laschen,
- Fig. 13: einen schematischen Ausschnitt der Schelle mit einer löffelförmigen Lasche,
- Fig. 14 a-c: mehrere schematische Querschnittsdarstellungen von Schellenanordnungen mit jeweils unterschiedlichen Einsatzteilen,
- Fig. 15: ein schematischer Ausschnitt der Schellenanordnung mit einer Scheckengewindeeinheit als Schellenbandspanneinheit,
- Fig. 16: ein schematischer Ausschnitt der Schellenanordnung mit einer Ohrklemme als Schellenbandspanneinheit,
- Fig. 17: ein schematischer Ausschnitt der Schellenanordnung mit einer Schellenverschraubung als Schellenbandspanneinheit,
- Fig. 18: ein schematischer Ausschnitt der Schellenanordnung mit einer Rasthakeneinheit als Schellenbandspanneinheit,
- Fig. 19: eine schematische Querschnittsdarstellung einer weiteren Schellenanordnung mit einem drahtförmigen Schellenband,
- Fig. 20: eine schematische Queransicht der Schellenanordnung aus Fig. 19,
- Fig. 21: eine schematische Querschnittsdarstellung einer weiteren Schellenanordnung mit einem zweiteiligen Schellenband
- Fig. 22: eine schematische Draufsicht auf ein weiteres, ausgebreitetes Schellenband mit längsaxial ausgerichteten Laschen bzw. Ausstanzungen,
- Fig. 23: eine schematische Querschnittsdarstellung des Schellenbandes aus Fig. 22,
- Fig. 24: eine schematische Draufsicht auf ein weiteres, ausgebreitetes Schellenband mit längsaxial abwechselnd ausgerichteten Laschen bzw. Ausstanzungen,
- Fig. 25: eine schematische Querschnittsdarstellung des Schellenbandes aus Fig. 24,
- Fig. 26: eine Detailansicht der Fig. 1,
- Fig. 27: eine schematische Darstellung eines weiteren Ausführungsbeispiels einer Schelle für die erfindungsgemäße Schellenanordnung,
- Fig. 28: eine Seitenansicht der Schelle aus Fig. 27,
- Fig. 29: einen Ausschnitt einer weiteren, schematischen Seitenansicht einer Schelle mit quer ausgerichteten Laschen,
- Fig. 30: einen Ausschnitt einer weiteren, schematischen Seitenansicht einer Schelle mit längs ausgerichteten Laschen,
- Fig. 31: eine schematische Darstellung eines weiteren Ausführungsbeispiels einer Schelle für die erfindungsgemäße Schellenanordnung,
- Fig. 32: einen Ausschnitt einer schematischen Seitenansicht der Schelle aus Fig. 31,
- Fig. 33: einen weiter vergrößerten Ausschnitt der Schelle aus Fig. 32,
- Fig. 34: einen Ausschnitt einer Querschnittsdarstellung der Schellenanordnung mit einer Schelle gemäß Fig. 31,
- Fig. 35: einen Ausschnitt einer weiteren, schematischen Seitenansicht der Schelle mit schräg ausgerichteten Laschen,
- Fig. 36: einen Ausschnitt einer schematischen Querschnittsdarstellung des Schellenbands mit einer wellenförmig gewölbten Lasche,
- Fig. 37: einen Ausschnitt einer schematischen Querschnittsdarstellung des Schellenbands mit einer trapezförmig gewölbten Lasche,
- Fig. 38: einen Ausschnitt einer schematischen Seitenansicht einer Schelle mit taillierten Laschen,
- Fig. 39: eine schematische Darstellung eines weiteren Ausführungsbeispiels einer Schelle für die erfindungsgemäße Schellenanordnung, und
- Fig. 40: einen Ausschnitt einer schematischen Seitenansicht der Schelle aus Fig. 39.

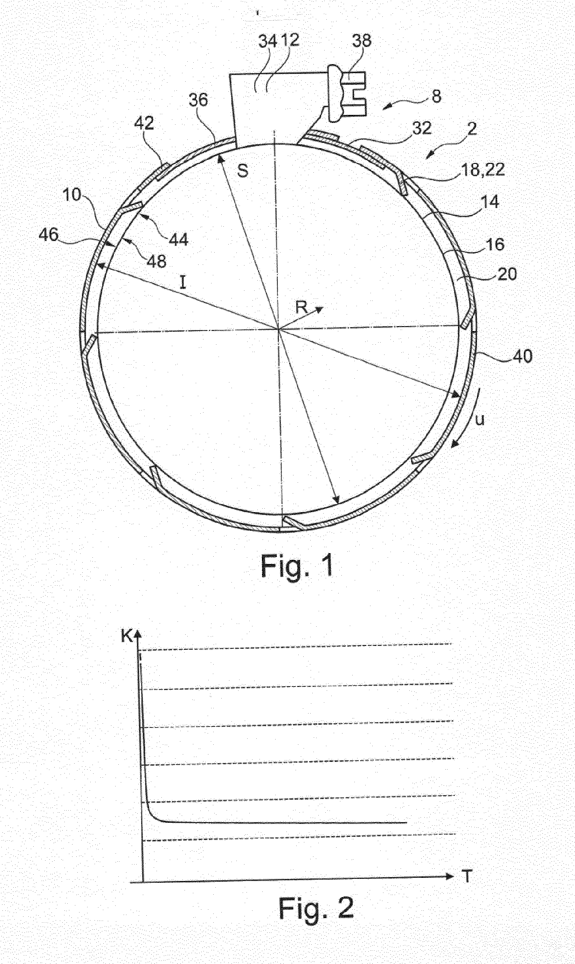

Die Figur 1 zeigt die erfindungsgemäße Schellenanordnung 2 in einer schematischen Schnittdarstellung. Die Schellenanordnung 2 dient zur Befestigung eines Schlauches (nicht dargestellt) auf einem Rohr oder Stutzen (nicht dargestellt). Die Schellenanordnung 2 umfasst eine Schelle 8 mit einem ringförmigen Schellenband 10 und einer Schellenbandspanneinheit 12. Bei der in Figur 1 dargestellten Schelle 8 handelt es sich um eine Schneckengewindeschelle 8 mit einem metallischen Schellenband 10. Ein erster Endabschnitt 32 des Schellenbands 10 ist mit einem Gehäuse 34 der Schellenbandspanneinheit 12 verbunden. Das Gehäuse 34 weist eine tunnelförmige Öffnung auf, in die ein zweiter Endabschnitt 36 des Schellenbands 10 eingeführt ist. Der zweite Endabschnitt 36 ist mit treppenartigen Gewindeerhebungen versehen, die mit einem Gewinde einer in das Gehäuse 34 eingefassten Gewindeschraube 38 zusammenwirken. Durch ein verdrehen der Gewindeschraube 38 kann der zweite Endabschnitt 36 in Umfangsrichtung durch die tunnelförmige Öffnung des Gehäuses 34 bewegt werden. Korrespondierend zu dieser Bewegung vergrößert oder verkleinert sich ein Schelleninnendurchmesser S. Das Gehäuse 34 mit der Gewindeschraube 38 wird auch als Gewindespanneinheit bezeichnet und ist eine bevorzugte Ausführungsform der Schellenbandspanneinheit 12.

Bevorzugt ist das Schellenband 10 aus Metall, insbesondere Federstahl. Das Schellenband 10 kann jedoch auch aus mehreren Teilen geformt und bzw. oder gefügt sein. Wie aus Figur 1 zu erkennen ist, ist das gezeigte Schellenband 10 aus einem ersten Endabschnitt 32, einem Mittelabschnitt 40 und einem zweiten Endabschnitt 36 gebildet. Die Endabschnitte 32, 36 sind jeweils an einer Überlappungsstelle 42 mit dem Mittelabschnitt 40 verbunden. Somit können für das ringförmige Schellenband 10 unterschiedliche Materialien verwendet werden.

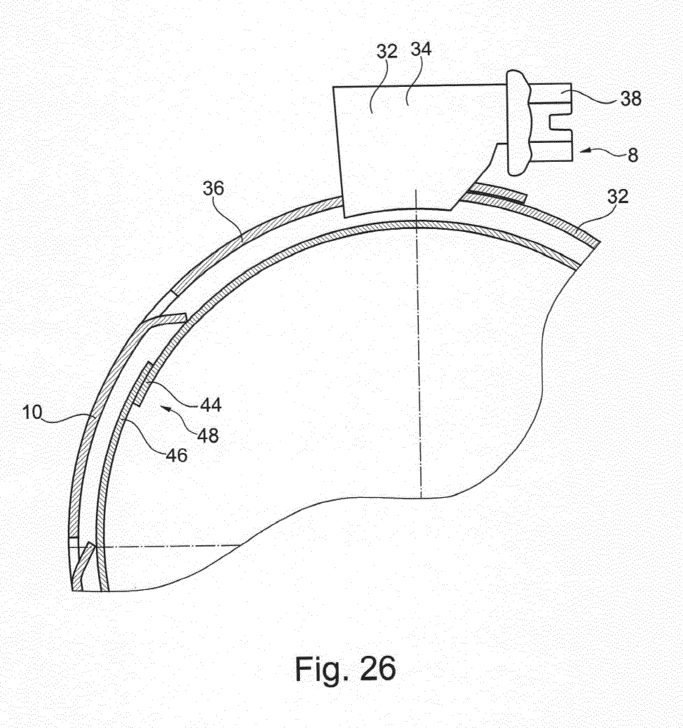

In den von dem Schellenband 10 umfassten Raum ist ein Einsatzteil 14 koaxial eingesetzt. Das Einsatzteil 14 ist dabei als ringförmiges Band 16 ausgebildet, deren Endabschnitte 44, 46 an einer Überlappungsstelle 48 überlappen (vgl. auch Detailansicht der Figur 26). Die Endabschnitte 44, 46 sind nicht miteinander verbunden, so dass sie eine relative Bewegung in Umfangsrichtung U zueinander ausführen können. Durch ihre jeweilige ringförmige Ausgestaltung und der koaxialen Anordnung weisen das Schellenband 10 und das Einsatzteil 14 eine gemeinsame Längsachse auf.

Nach einem Einsetzen des Einsatzteils 14 in das Schellenband 10 bildet sich zwischen dem Schellenband 10 und dem Einsatzteil 14 ein Ringraum 20 aus. In dem Ringraum 20 sind mehrere Federn 18 eingebrachte. Diese Federn 18 sind über den Umfang des Schellenbands 10 verteilt. Dabei sind die Federn 18 in der Weise ausgerichtet, dass sie in Radialrichtung R federwirkend zwischen dem Schellenband 10 und dem Einsatzteil 14 angeordnet sind. Die Federn 18 verursachen also jeweils eine Spannkraft in Radialrichtung R zwischen dem Schellenband 10 und dem Einsatzteil 14. Wie aus der Figur 1 zu entnehmen ist, sind die Federn 18 durch schräg zur Radialrichtung R von dem Schellenband 10 nach innen ragende Laschen 22 gebildet. Die Laschen 22 können grundsätzlich an das Schellenband 10 angeformt sein. Besonders bevorzugt sind die Laschen 22 jedoch durch Ausstanzungen und Ausbiegungen aus dem Schellenband 10 gebildet. Somit sind das Schellenband 10 und die Laschen 22 bzw. die Federn 18 einteilige ausgestaltet.

Um ein Schlauch auf einem Rohr zu befestigen, wird zunächst ein Endabschnitt des Schlauches auf ein Endabschnitt des Rohres gesteckt. Radial außen seitig auf dem Endabschnitt des Schlauchs wird die Schellenanordnung 2 angeordnet, wobei das Einsatzteil 14 über den Schlauch gesteckt wird. Eine radial innenseitige Mantelfläche des Einsatzteils 14 kommt somit in unmittelbaren Kontakt mit einer radial außenseitigen Mantelfläche des Endabschnitts des Schlauchs. Um einen festen Sitz des Endabschnitts des Schlauchs auf dem Endabschnitt des Rohrs sowie eine Dichtigkeit zwischen dem Schlauch und dem Rohr zu gewährleisten, wird das Schellenband 10 mittels der Schellenbandspanneinheit 12 in Umfangsrichtung U gespannt. Die Endabschnitte 32, 36 des Schellenbands 10 werden also in entgegengesetzter Umfangsrichtung U zueinander bewegt. Damit verringert sich ein Innendurchmesser I des Schellenbands 10. Durch die Verringerung des Innendurchmessers I des Schellenbands 10 drücken die Laschen 22 zunehmend stärker radial außenseitig auf das Einsatzteil 14. Dadurch verringert sich zunehmend ein Innendurchmesser S des Einsatzteils 14. Das Einsatzteil 14 ist dazu ausgestaltet, die durch die Federn Laschen 22 außenseitig eingebrachte Kraft in eine flächig auf den Schlauch wirkende Kraft umzuwandeln. Das Einsatzteil 14 weist dazu eine entsprechende Biegesteifigkeit auf. Somit übt das Einsatzteil 14 eine flächige bzw. über einen Umfangabschnitt verteilte Spannkraft auf den Schlauch aus, so dass dieser sicher und dicht auf dem Rohr sitzt. Durch die Mehrzahl der Laschen 22 kann gewährleistet werden, dass das Einsatzteil 14 mit einer über den Umfang betrachteten annähernd gleichmäßigen Spannkraft auf den Schlauch wirkt.

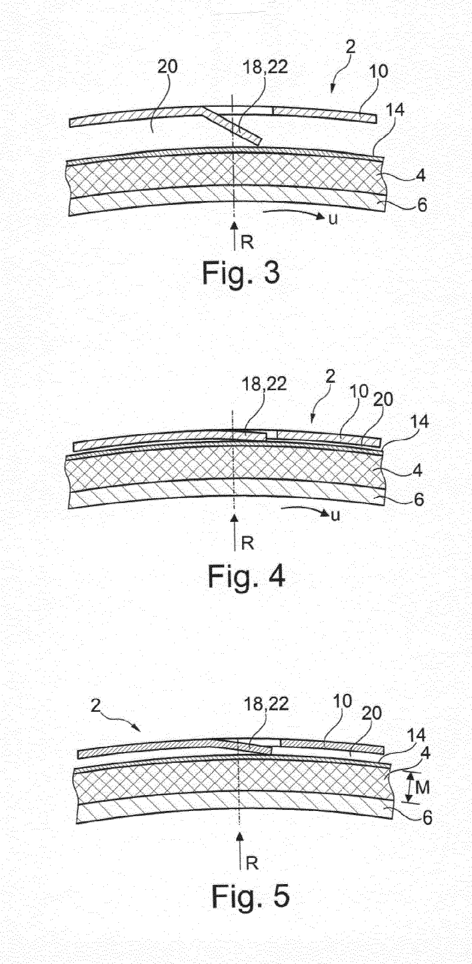

Durch ein Nachlassen der Elastizität des Schlauches - auch als Relaxieren des Schlauches bezeichnet - aufgrund von Temperaturschwankungen oder aufgrund einer Alterung des Schlauchmaterials besteht bei aus dem Stand der Technik bekannten Schellenanordnungen die Gefahr, dass sich die Spannkraft K auf den Schlauch, wie sie in Figur 2 dargestellt ist, mit der Zeit T verringert. Damit verringert sich die Klemmkraft zwischen dem Schlauch und dem Rohr, so dass der Schlauch in einem ungünstigen Fall ungewollt von dem Rohr rutscht. Dieser Nachteil ist durch die Schellenanordnung 2, wie Sie in Figur 1 dargestellt ist, behoben. Die nachfolgenden Figuren 3-5 zeigen auf, wie ein automatisches bzw. kontinuierliches Nachspannen des Schlauches 4 auf dem Rohr 6 erfolgt.

In der Figur 3 ist ein schematischer Ausschnitt einer erfindungsgemäßen Verbindungsanordnung 2 in einem Vormontagezustand wiedergegeben. Dazu wird zunächst der Schlauch 4 auf das Rohr 6 gesteckt. In dem Bereich, in dem der Schlauch 4 das Rohr 6 überlappt, wird von außen die erfindungsgemäße Schellenanordnung 2 angebracht. Dazu kommt das Einsatzteil 14 innenseitig umlaufend in Kontakt mit einer äußeren Mantelfläche des Schlauches 4. Das Ende einer jeden Lasche 22 ist in Kontakt mit einer radial außenseitigen Mantelfläche des Einsatzteils 14. Die als Feder 18 ausgebildete Lasche 22 kann vorgespannt sein; sie kann aber auch zumindest im Wesentlichen spannungsfrei auf dem Einsatzteil 14 aufliegen. In diesem Zustand können noch Nachjustierungen des Schlauches 4 auf dem Rohr 6 erfolgen.

Daraufhin wird das Schellenband 10 mit einer nicht dargestellten Schellenbandspanneinheit 12 gespannt, so dass sich der Innendurchmesser I des Schellenbands 10 verringert. Damit wird ein Ringraum 20 zwischen dem Schellenband 10 und dem Einsatzteil 14 verringert. Zugleich wird die Lasche 22 in der Weise gespannt, dass die Lasche 22 in Radialrichtung R federnd zwischen dem Schellenband 10 und dem Einsatzteil 14 wirkt.

In der Figur 4 ist die Verbindungsanordnung 2 in einem Montagezustand dargestellt. Hierbei ist die Lasche 22 so weit gespannt, dass der Ringraum 20 deutlich kleiner geworden ist. Außerdem ist die Lasche 22 annähernd so weit zurück gefedert, dass sie mit dem Schellenband 10 eine gemeinsame ringförmige Form annimmt. Aufgrund der erhöhten, durch die Lasche 22 auf das Einsatzteil 14 wirkende Federkraft wird der Schlauch 4 in Umfangsrichtung U betrachtet flächig an das Rohr 6 gedrückt. Zwischen dem Schlauch 4 und dem Rohr 6 bildet sich eine Dichtung aus.

Zuvor wurde bereits erläutert, dass der Schlauch 4 relaxieren kann. Erfolgt dies, so verringert sich zumeist seine Materialstärke M (vgl. Figur 5) in Radialrichtung R. Aufgrund der verringerten Materialstärke M verringert sich auch ein Außendurchmesser des Schlauches 4. Diesem verringerten Außendurchmesser folgt das Einsatzteil 14 kontinuierlich, so dass auch der Innendurchmesser S des Einsatzteils 14 sinkt. Kommt es in diesem Zusammenhang zu größeren Durchmesserveränderungen, so ist das Schellenband 10 zumeist nicht dazu eingerichtet, einer entsprechenden Durchmesserveränderung selbsttätig zu folgen. Deshalb sind erfindungsgemäß Laschen 22 vorgesehen, die eine Spannkraft auf das Einsatzteil 14 aufrechterhalten. In Figur 5 ist ein entsprechender Relaxierzustand gezeigt, der während des Betriebes der Schlauch-Rohranordnung mit der erfindungsgemäßen Schellenanordnung 2 auftreten kann. Hierbei wird durch die nachfolgenden Laschen 22 die Spannkraft auf das Einsatzteil 14 und somit eine Dichtung zwischen dem Schlauch 4 und dem Rohr 6 ununterbrochen aufrechterhalten. Der korrekte Sitz des Schlauches 4 auf dem Rohr 6 bleibt ebenfalls erhalten.

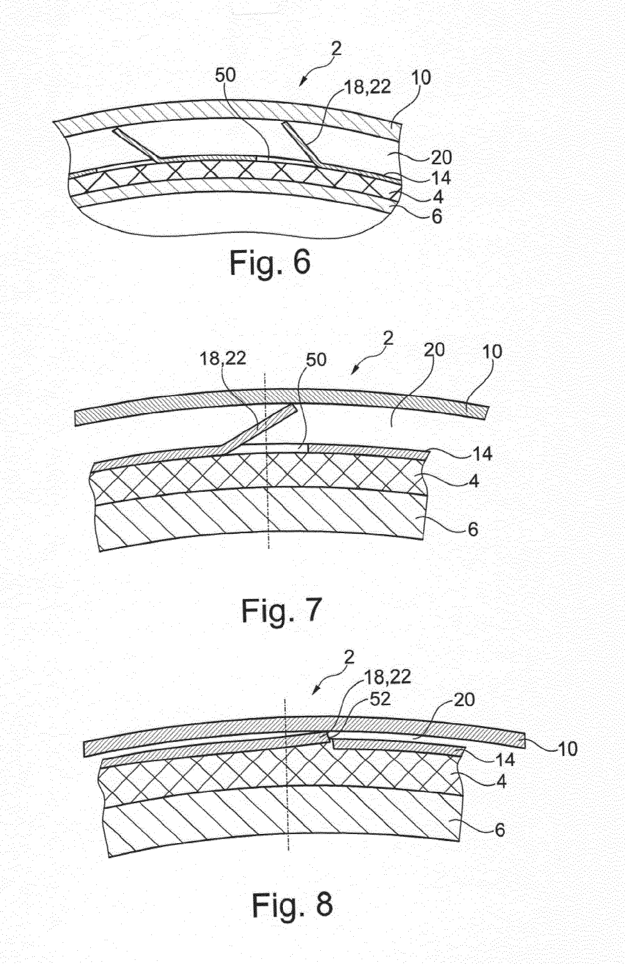

In den Figuren 6 und 7 ist jeweils ein schematischer Ausschnitt einer erfindungsgemäßen Schellenanordnung 2 in einem Vormontagezustand wiedergegeben, wobei die Federn 18 durch schräg zur Radialrichtung R von dem Einsatzteil 14 nach außen ragende Laschen 22 gebildet sind. Hierbei gelten analoge Zusammenhänge, vorteilhafte Merkmale und Vorteile, wie sie für die Laschen 22 erläutert wurden, die schräg von dem Schellenband 10 nach innen ragen. Anders als zuvor erläutert, sind jedoch die Laschen 22 nicht an dem Schellenband 10, sondern an dem Einsatzteil 14 angeformt. Die die Laschen 22 können dazu an das Einsatzteil 14 angeformt oder von diesem gebildet sein. Aus den Figuren 6 und 7 ist jeweils zu erkennen, dass die Laschen 22 durch Ausstanzungen und Umbiegungen aus dem Einsatzteil 14 geformt sind. Dabei ist es bevorzugt, dass an in Axialrichtung betrachteten Stirnseiten keine Ausstanzungen erfolgen, so dass das Einsatzteil 14 an beiden Stirnseiten stetig und bzw. oder ununterbrochen ausgebildet ist. Das Einsatzteil 14 weist also an seinen Stirnseiten einen ununterbrochenen Ringabschnitt 50 auf. Damit wird ein entsprechend stetiger und bzw. oder ununterbrochener Kontakt zu dem Schlauch 4 gewährleistet.

In Figur 8 ist ein schematischer Ausschnitt der zuvor erläuterten Verbindungsanordnung 2 in einem Montagezustand gezeigt. Ein Ringraum 20 zwischen dem Einsatzteil 14 und dem Schellenband 10 verbleibt jedoch. Somit wird gewährleistet, dass die Laschen 22 nicht vollständig in die jeweiligen Ausnehmungen 52 zurückgedrängt werden, die durch die Ausstanzungen und Umbiegungen der Laschen 22 entstehen. Die durch das Einsatzteil 14 auf den Schlauch 4 wirkende Spannkraft bewirkt, dass jeweils ein Teil des Schlauches 4 in jede der Ausnehmungen 52 drängt wird. Damit wird die Schellenanordnung 2 an dem Schlauch 4 verankert, so dass die Schellenanordnung 2 gegen ein axiales Verrutschen auf dem Schlauch 4 gesichert ist.

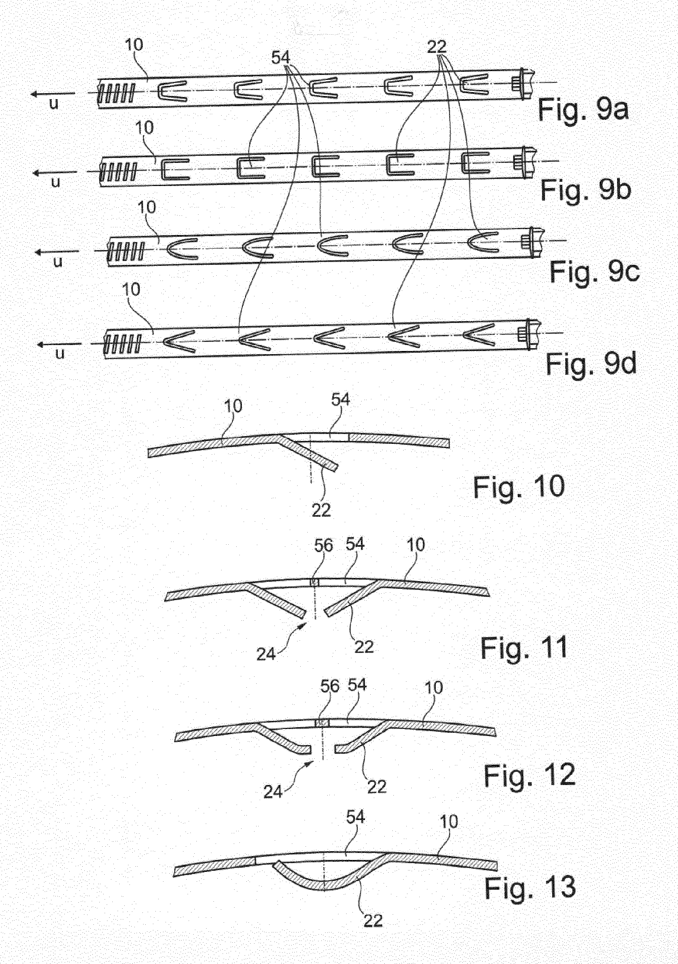

Die Figuren 9a bis 9d zeigen mehrere schematische Draufsichten auf jeweils ein ausgebreitetes Schellenband 10 mit jeweils unterschiedlichen Laschen 22 bzw. Ausstanzungen 54. Die Laschen 22 bzw. die Ausstanzungen 54 sind dabei jeweils in Umfangsrichtung U ausgerichtet. In Figur 9a sind die Ausstanzungen 54 bzw. die Laschen 22 trapezförmig. In Figur 9b sind die Ausstanzungen 54 bzw. die Laschen 22 rechteckförmig. In Figur 9c sind die Ausstanzungen 54 bzw. die Laschen 22 parabelförmig. In Figur 9d sind die Ausstanzungen 54 bzw. die Laschen 22 spitzförmig.

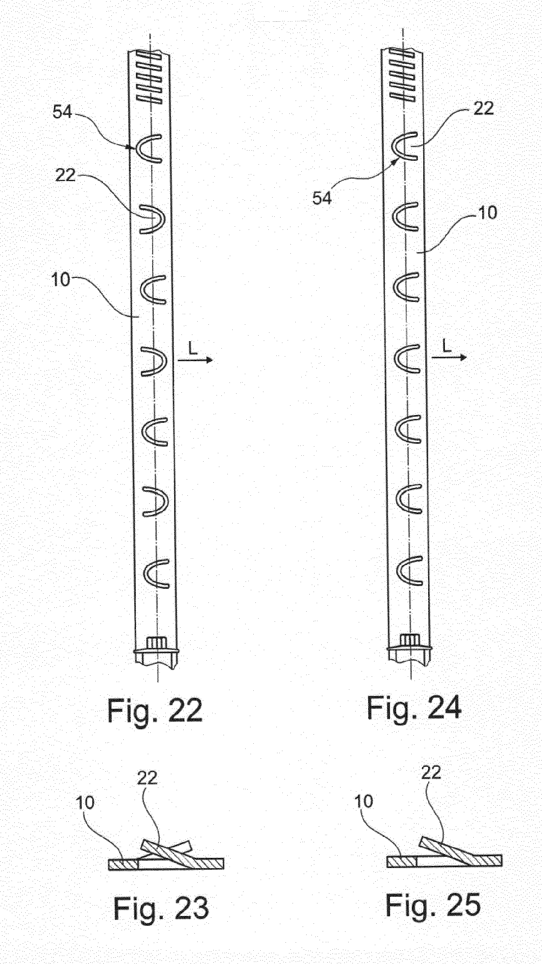

Die Figuren 22 und 24 zeigen weitere schematische Draufsichten auf jeweils ein ausgebreitetes Schellenband 10 mit Laschen 22 bzw. Ausstanzungen 54. Die Laschen 22 sind dabei längsaxial, also mit einer oder gegen eine Längsrichtung L der Schellenanordnung 2, ausgerichtet. In der Praxis wurde festgestellt, dass derartig ausgerichtete Laschen 22 weniger zu einem unerwünscht hohen Haftwiderstand, auch als Verklemmen bezeichnet, neigen. Damit ist eine Schellenanordnung 2 mit einem derartigen Schellenband 10 besonders fehlerarm. Die Figur 24 und eine zugehörige Querschnittsdarstellung aus Figur 25 zeigen ein Schellenband 10 mit gegen eine Längsrichtung L ausgerichteten Laschen 22 bzw. Ausstanzungen 54. Das Einsatzteil 14 kann entsprechend ausgelegt sein, um die Klemmkräfte der Laschen 22 über einen schmalen Ringbereich aufzunehmen. Somit kann das Einsatzteil 14 einsprechend kompakt ausgestaltet sein. Wie aus der Figur 22 und einer zugehörigen Querschnittsdarstellung aus Figur 23 hervorgeht, können die Laschen 22 bzw. Ausstanzungen 54 aber auch abwechselnd mit der Längsrichtung L bzw. gegen die Längsrichtung L ausgerichtet sein. Dies erlaubt eine symmetrischere Verteilung der durch die Laschen 22 hervorgerufenen Klemmkräfte über eine Oberfläche des Schellenbandes 10 bzw. des Einsatzteils 14.

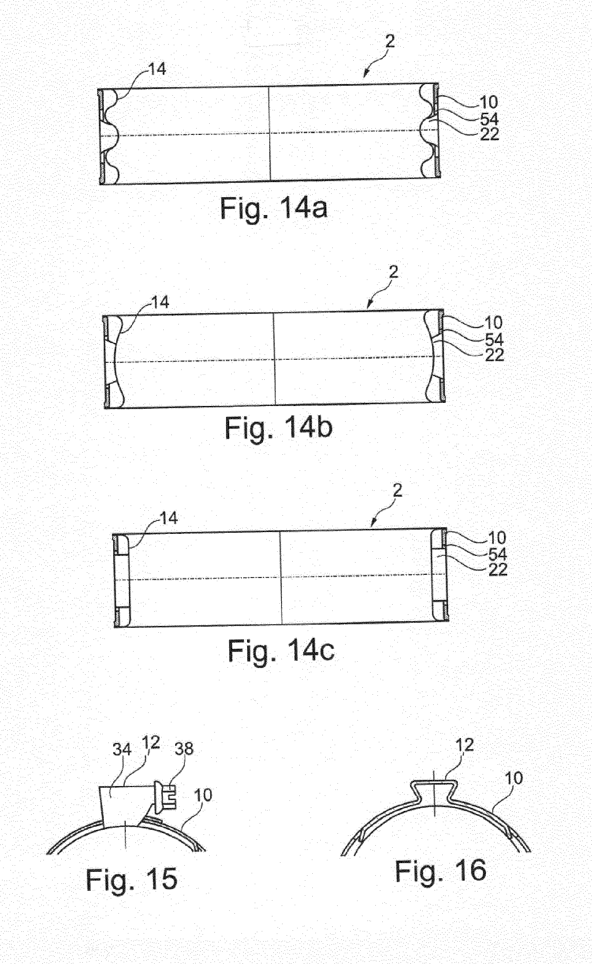

Die Figuren 14a bis 14c zeigen mehrere schematischer Querschnittdarstellungen einer Schellenanordnung 2 mit jeweils unterschiedlichen Einsatzteilen 14. Die Einsatzteile 14 unterscheiden sich dabei in ihrem jeweiligen Querschnitt. In den Figuren 14a und 14b ist der jeweilige Querschnitt des Einsatzteils 14 wellenförmig. In Figur 14c ist der Querschnitt des Einsatzteils 14 U-förmig.

Zu den Figuren 9a bis 9d und 14a bis 14c wurden unterschiedliche Querschnitte für das Einsatzteil 14 sowie unterschiedliche Ausbildungen für die Laschen 22 bzw. Ausstanzungen 54 erläutert. Bevorzugt ist es vorgesehen, dass die Kontur einer jeweiligen Lasche 22 bzw. der entsprechenden Ausstanzungen 54 zu einer Kontur eines mittleren Abschnitts eines Querschnitts des Einsatzteils 14 korrespondiert. Somit wird ein flächiger Kontakt zwischen der jeweiligen Lasche 22 und dem Einsatzteil 14 gewährleistet, so dass Kräfte aus der Lasche 22 möglichst großflächig auf das Einsatzteil 14 eingeleitet werden können. Dies bietet die Möglichkeit, dass das Einsatzteil 14 möglichst gleichmäßig auf den Schlauch 4 einwirkt.

Die Figuren 10 bis 13 zeigen jeweils einen schematischen Ausschnitt der Schelle 8 mit unterschiedlich ausgestalteten Laschen 22. In Fig. 10 ist eine aus dem Schellenband 10 ausgestanzte und radial nach innen gebogene, flache Lasche 22 dargestellt. Diese kann besonders einfach und präzise hergestellt werden. In Fig. 11 sind zwei aus dem Schellenband 10 ausgestanzte und radial nach innen gebogene Laschen 22 dargestellt. Die Laschen 22 haben einen jeweils umgekehrten Zeigersinn, so dass deren Enden zueinander zeigen. Die beiden Laschen 22 bilden deshalb eine Gruppe 24. Die Ausstanzungen 54 sind durch einen axial ausgerichteten Steg 56 voneinander getrennt. Der Steg 56 erhält die Stabilität des Schellenbandes 10 im Bereich der beiden Ausstanzungen 54. In Fig. 12 sind die Laschen zum Schellenband 10 hin jeweils konkav gewölbt ausgestaltet. Damit kann eine erhöhte Kontaktfläche zu dem Einsatzteil 14 erreicht werden. Damit wird das Einsatzteil 14 radial außenseitig nicht mit zu hohen Federkräften je Flächeneinheit belastet und kann die Kräfte über die radiale Innenfläche gleichmäßig auf den Schlauch übertragen. In Fig. 13 ist schematisch der Ausschnitt des Schellenbandes 10 aus Fig. 10 wiedergegeben, wobei jedoch die Lasche 22 ebenfalls zum Schellenband 10 hin konkav gewölbt ausgestaltet ist.

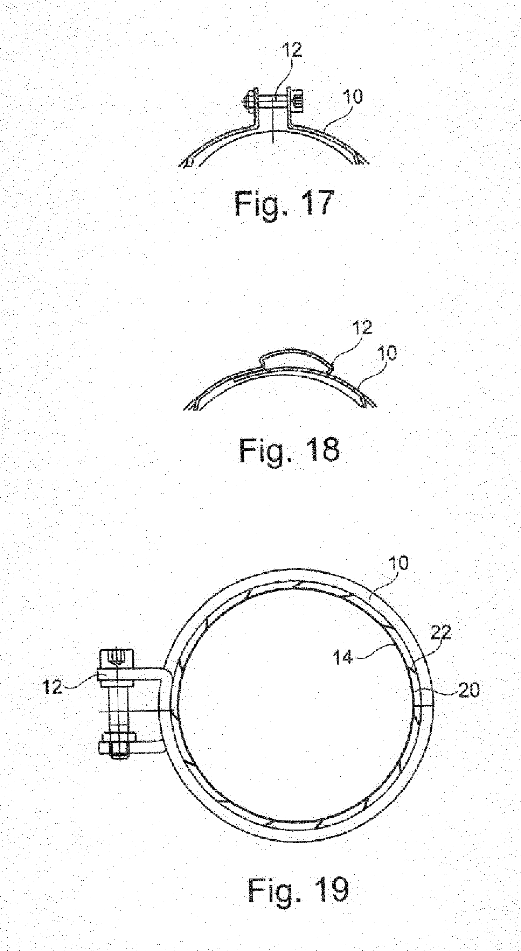

Die Figuren 15 bis 18 zeigen unterschiedliche Ausgestaltungen für die Schellenbandspanneinheit 12. Eine dieser Ausgestaltungen, wie sie in Fig. 15 dargestellt ist, ist die bereits erläuterte Gewindespanneinheit 58. Eine weitere Ausgestaltung der Schellenbandspanneinheit 12 ist in Fig. 16 dargestellt. Hierbei handelt es sich um eine aus dem Stand der Technik bekannte Ohrenklemme 60. Ferner ist in Fig. 17 eine bekannte Schlauchschellenverschraubung dargestellt, die als Schellenbandspanneinheit 12 verwendet werden kann. Schließlich zeigt Fig. 18 eine Schellenbandspanneinheit 12 mit Rastnasen.

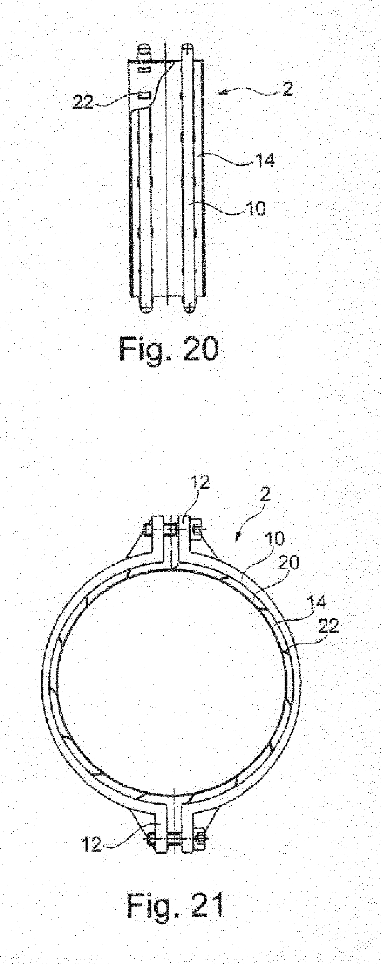

Eine besondere Ausgestaltung der Schellenanordnung 2 ist aus der Zusammenschau der Figuren 19 und 20 zu entnehmen. Hierbei ist die Schelle 8 aus einem Schellenband 10 mit im Wesentlichen zwei koaxial in einer zylindrischen Ebene zueinander angeordneten Drahtringe und einer Schellenbandverschraubung gebildet. Diese Ausgestaltung ist besonders einfach und kostengünstig herstellbar. Die Laschen 22 werden durch das Einsatzteil 14 gebildet. Die Schelle 8 kann aber auch noch eine weitere als Schellenbandverschraubung ausgestaltete Schellenbandspanneinheit 12 aufweisen, wie sie in Figur 21 dargestellt ist. Vorzugsweise sind die beiden Schellenbandspanneinheiten 12 gegenüberliegend angeordnet.

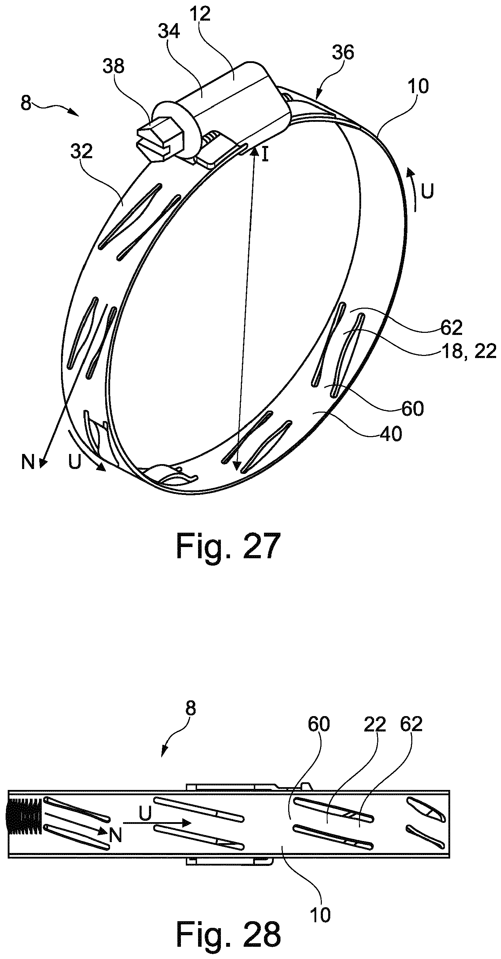

Eine besonders bevorzugte Ausgestaltung der Schelle 8 für die Schellenanordnung 2 ist der Figur 27 zu entnehmen. In ihren Grundeigenschaften entspricht sie der Schelle 8 aus Fig. 1. Die Schelle 8 weist jedoch Laschen 22 als Federn 18 auf, die mit ihren längsseitigen beiden Endabschnitten 60, 62 mit dem Schellenband 10 verbunden sind. Jede Lasche 22 kann eine Längsachse N aufweisen, die sich zwischen den Endabschnitten 60, 62 erstreckt. Zur besseren Veranschaulichung ist die Längsachse N in Fig. 27 verlängert dargestellt. Außerdem ist es vorteilhaft, wenn jede der Längsachsen N schräg zu der Umfangsrichtung U des Schellenbands 10 angeordnet ist. In die Schelle 8 wird das hier nicht dargestellte Einsatzteil 14 eingesetzt, so dass die Laschen 22 federnd zwischen dem Schellenband 10 und dem Einsatzteil 14 wirken können. Daraus ergeben sich die zuvor erläuterten Vorteile und Effekte.

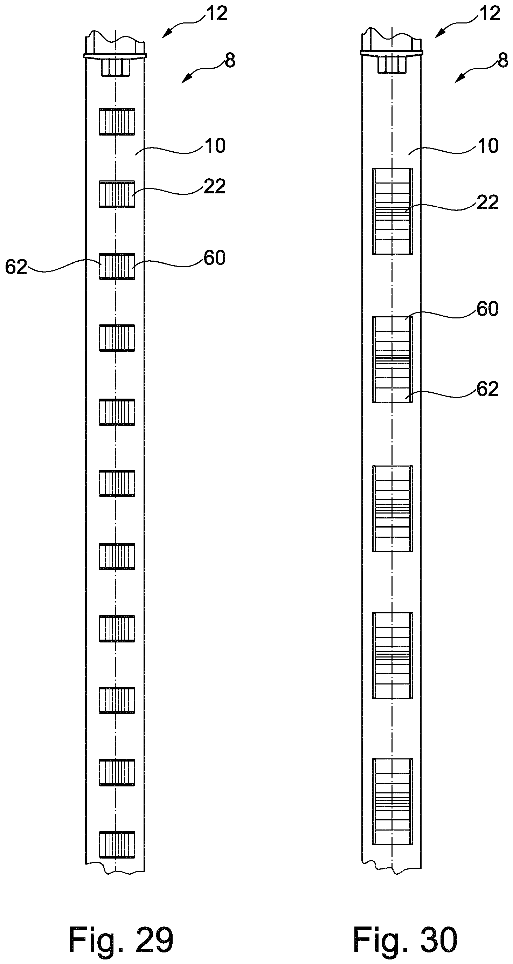

In Fig. 28 ist eine schematische Seitenansicht der Schelle 8 auf Fig. 27 dargestellt. Korrespondierend zu den Figuren 22 und 24 können die in Figuren 27 und 28 dargestellten Laschen 22 auch quer (wie in Fig. 29 gezeigt) oder parallel (wie in Fig. 30 gezeigt) zu einer Umfangsrichtung U des Schellenbands 10 ausgerichtet sein. Außerdem weisen derartige Laschen 22 analoge Vorteile auf, wie sie zu den Figuren 22 und 24 erläutert wurden sind.

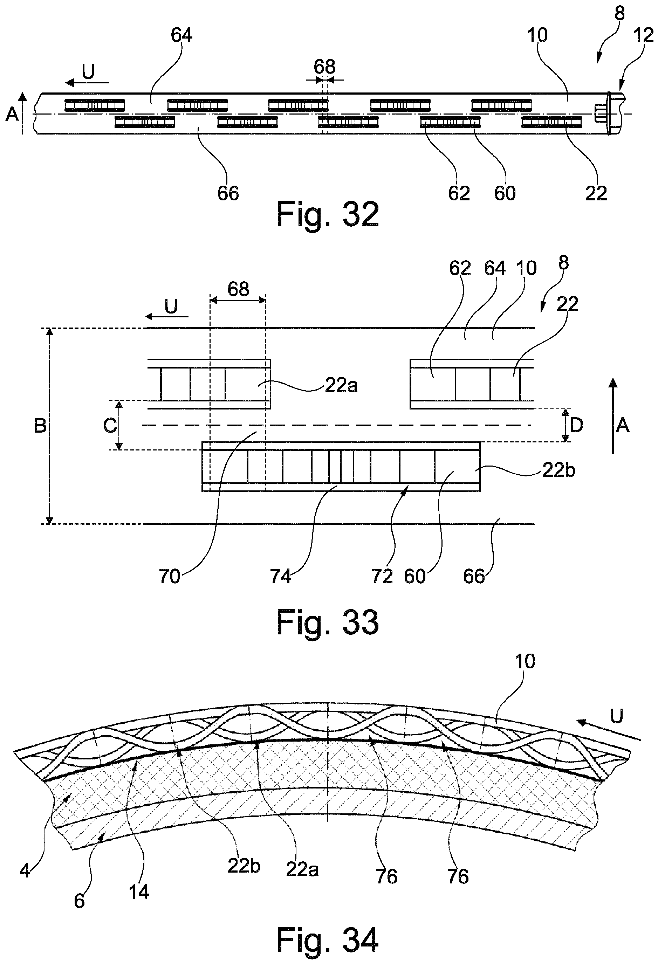

Eine weitere bevorzugte Ausgestaltung der Schelle 8 ist den Fig. 34 und 32 zu entnehmen. In Fig. 34 ist die Schelle 8 in einer schematischen Perspektivdarstellung wiedergegeben. Aus der Fig. 32 ist ein Ausschnitt einer Seitenansicht der Schelle 8 aus Fig. 34 gezeigt. Für eine entsprechende Ausgestaltung ist es vorgesehen, dass jeweils zwei in Axialrichtung A der Schellenanordnung 2 benachbarte Laschen 22 in Umfangsrichtung U des Schellenbands 10 versetzt und in Axialrichtung A des Schellenbands 10 überlappend angeordnet sind. Durch diese Anordnung der Laschen 22 kann gewährleistet werden, dass die Laschen 22 das Einsatzteil 14 entlang eines Pfades über den Umfang des Schellenbands 10 bzw. des Einsatzteils 14 mit annähernd gleichmäßiger Spannkraft beaufschlagen. Das Einsatzteil 14 überträgt die Spannkraft entsprechend auf den Schlauch 4, so dass dieser somit sicher und dicht auf dem Rohr 6 bzw. dem Stutzen sitzt. Die Fig. 34 und 32 zeigen auch, dass der ersten Endabschnitt 32 des Schellenbands 10 an der Schellenbandspanneinheit 12 befestigt ist. Außerdem umfasst die Schellenanordnung 2 eine Mehrzahl von federnden Laschen 22. Die Laschen 22 können in zwei Gruppen unterteilt werden, wobei die Laschen 22 der ersten Gruppe auf einem ersten Ringbereich 64 und die Laschen 22 der zweiten Gruppe auf einem zweiten Ringbereich 66 angeordnet sind. In jedem der Ringbereiche 64, 66 sind die jeweils zugehörigen Laschen 22 mit einem Abstand hintereinander angeordnet. In Umfangsrichtung U betrachtet folgt auf eine Lasche 22 der ersten Gruppe jeweils eine Lasche 22 der zweiten Gruppe, und umgekehrt. Die Laschen 22 wechseln sich also ab. Dabei ist es vorgesehen, dass sich zwei benachbarte Laschen 22, von denen jeweils eine aus der ersten Gruppe und eine aus der zweiten Gruppe stammen, überlappen. Mit dem Überlappen ist bevorzugt gemeint, dass die beiden Laschen 22 einen gemeinsamen Bogenabschnitt 68 des Schellenbands 10 überdecken oder überstreichen.

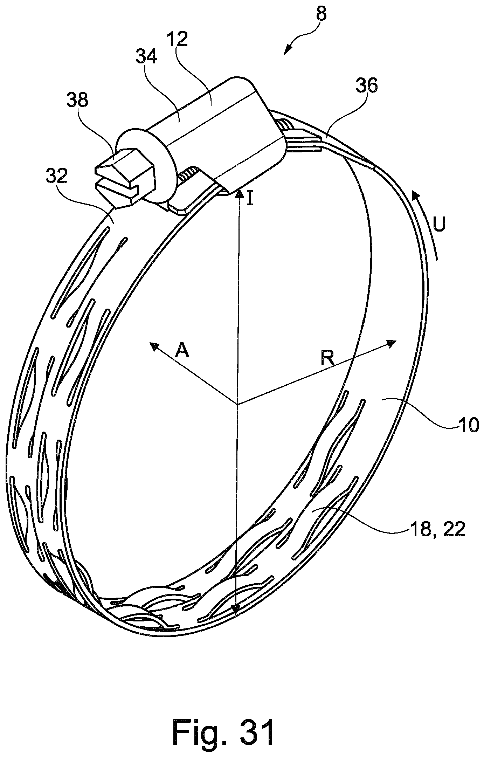

Um diesen Zusammenhang genauer betrachten zu können, zeigte Fig. 33 einen Ausschnitt der Schellenanordnung 2 in einem vergrößerten Maßstab. Soweit es sinnvoll ist, wird auf die vorherigen Erläuterungen Bezug genommen. Zu erkennen ist, dass zwei in Axialrichtung A des Schellenbands 10 benachbarte Laschen 22a, 22b überlappend angeordnet sind. Diese Überlappung ist in Axialrichtung A des Schellenbands 10. Teile der beiden Laschen 22a, 22b sind also in einem gemeinsamen Bogenabschnitt 68 des Schellenbands 10 angeordnet. Die beiden benachbarten Laschen 22a, 22b sind voneinander beanstandet. Wie aus der Fig. 33 ersichtlich ist, erstreckt sich zwischen den beiden Laschen 22a, 22b ein von dem Schellenband 10 gebildeter Steg 70. Darüber hinaus ist aus einer Zusammenschau der Figuren 31 bis 33 und zu erkennen, dass jeder der Laschen 22 durch zwei einander gegenüber angeordneten Endabschnitte 60, 62 der jeweiligen Lasche 22 mit dem Schellenband 10 verbunden ist. Somit weist jede Lasche 22 zwei Außenkanten 72 auf, die sich jeweils zwischen den Endabschnitten 60, 62 erstrecken. Jede der Außenkanten 72 ist durch einen Schlitz 74 von dem Schellenband 10 getrennt. Somit sind zwei in Axialrichtung A benachbarte Laschen 22a, 22b durch einen Schlitz 74 der ersten Lasche 22a, einen Steg 70 und einen Schlitz 74 der zweiten Lasche 22b in Axialrichtung A voneinander beanstandet. Dieser Abstand C, vorzugsweise als ein minimaler Abstand oder ein mittlerer Abstand von zwei in Axialrichtung A überlappenden Laschen 22a, 22b betrachtet, ist vorteilhafter Weise kleiner als ein Viertel, insbesondere kleiner als ein Fünftel, einer mittleren Breite B des Schellenbands 10 ist. Entsprechendes kann für eine Breite D des Stegs 70 gelten.

Darüber hinaus ist es bevorzugt vorgesehen, dass die gleichen in Axialrichtung A benachbarten Laschen 22a, 22b versetzt zueinander angeordnet sind. Dieser Versatz erstreckt sich in Umfangsrichtung U des Schellenbands 10. Die beiden Laschen 22a, 22b sind also in Umfangsrichtung U des Schellenbands 10 versetzt zueinander angeordnet. Durch die zuvor erläuterte Überlappung sowie den genannten Versatz kann ein Bogenabschnitt 68 des Schellenbands 10 von mehreren Laschen 22 ununterbrochen bedeckt oder überstrichen sein. In dem zuvor genannten Bogenabschnitt 68 gibt es also keinen Unterbogenabschnitt, der frei von Laschen 22 ist.

Ein entsprechender Zusammenhang ist aus der Fig. 34 zu erkennen. Die schraffiert dargestellten Laschen 22b sind in dem zweiten Ringbereich 66 des Schellenbands 10 angeordnet. Die nicht schraffierten Laschen 22a sind in dem ersten Ringbereich 64 des Schellenbands 10 angeordnet. Die Laschen 22a, 22b wechselnden sich in Umfangsrichtung U in der Weise ab, dass eine Wölbung einer Lasche 22a beginnt, bevor eine Wölbung einer in Umfangsrichtung U vorangehenden Lasche 22b endet. Hieraus ergibt sich eine Überdeckung der beiden Wölbungen. Somit ist das Einsatzteil 14 in Umfangsrichtung U betrachtet einer quasi kontinuierlichen Federkraft ausgesetzt. Das Einsatzteil 14 gibt die Federkraft entsprechend verteilt weiter, so dass es zu einer vergleichmäßigten Krafteinwirkung auf den Schlauch 4 und somit auch zwischen Schlauch und Stutzen 6 kommt. Dabei ist die Überlappung der Laschen 22 vorzugsweise so gewählt, dass Zwischenräume 76 ohne oder mit geringerer Einwirkung einer Federkraft minimiert oder zumindest möglichst klein ausfallen. Entsprechendes gilt für den Abstand C zwischen zwei in Axialrichtung A benachbarten Laschen 22a, 22b.

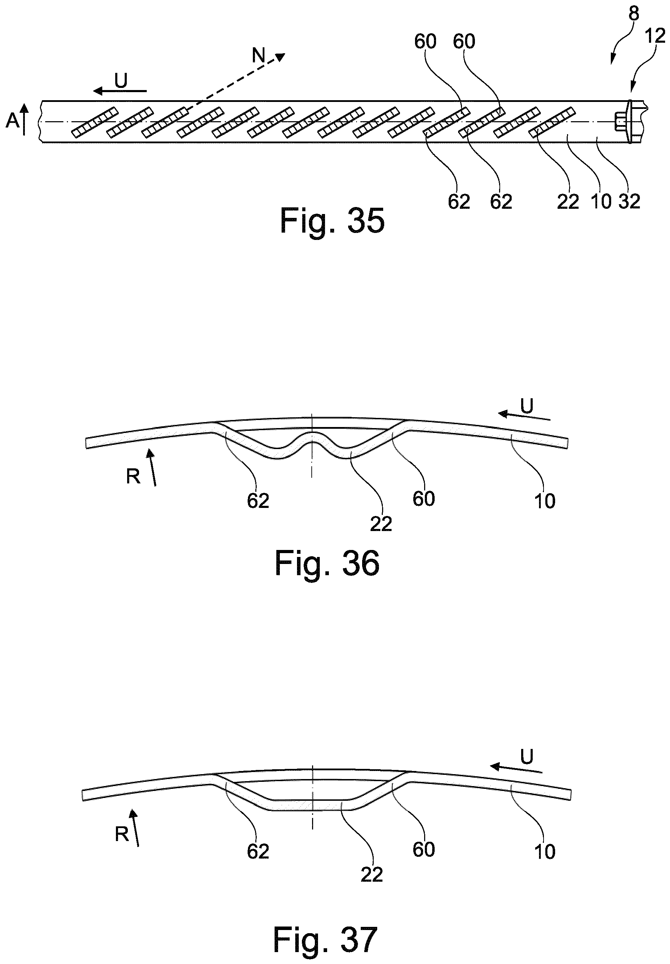

Eine weitere Ausgestaltung des Schellenbands 10 ist in Fig. 35 gezeigt. Soweit es sinnvoll ist, wird auf die Erläuterungen zu den Figuren 31 bis 34 Bezug genommen. Davon abweichend sind die Laschen 22 nicht parallel zu einer Umfangsrichtung U des Schellenbands 10 ausgerichtet. Vielmehr weist jede Lasche 22 eine Längsachse N auf, die sich zwischen zwei Endabschnitten 60, 62 der jeweiligen Lasche 22 erstreckt, wobei jede der Längsachse N schräg zu der Umfangsrichtung U des Schellenbands 10 ausgerichtet ist. Vorzugsweise schließen jeweils eine der Längsachsen N und die Umfangsrichtung U einen spitzen Winkel ein. Diese Anordnung der Laschen 22 ermöglicht es, dass zwei in Axialrichtung A benachbarte Laschen 22 in Umfangsrichtung U des Schellenbands 10 versetzt und in Axialrichtung A des Schellenbands 10 überlappend angeordnet sind. Somit ergeben sich entsprechende Vorteile, wie sie zu den Figuren 31 bis 34 erläutert wurden sind.

Weitere vorteilhafte Ausgestaltungen der Laschen 22 lassen sich den Figuren 36 und 37 entnehmen. Sie zeichnen sich dadurch aus, dass jede der Laschen 22 durch zwei einander gegenüber angeordneten Endabschnitte 60, 62 der entsprechenden Lasche 22 mit dem Schellenband 10 verbunden ist. Mit der Montage des Schellenbands 10 drücken die Laschen 22 auf den Schlauch 4. Dabei werden die Laschen 22 in Radialrichtung R zusammengedrückt, so dass sich die Laschen 22 um eine Achse in Axialrichtung A verbiegen. Darüber hinaus erfolgt eine Stauchung der Laschen 22 in Umfangsrichtung U. Somit setzt sich die korrespondierende Federkraft einer jeweiligen Lasche 22 aus einer die Verbiegung repräsentierenden Kraftkomponente und einer die Stauchung repräsentierenden Kraftkomponente zusammen. Damit lässt sich die Baugröße der Laschen 22 zumindest in Radialrichtung R besonders klein halten. Darüber hinaus können durch derartige Laschen 22 besonders hohe Kräfte auf die Schlauchoberfläche ausgeübt werden. Ausgewählte Konturformen der Laschen 22, wie eine Wellenform (wie sie in Figur 36 dargestellt ist) oder eine Trapezform (wie sie in Figur 37 dargestellt ist), verbessern die Vergleichmäßigung eines Krafteintrags der jeweiligen Lasche 22 in Umfangsrichtung U des Schellenbands 10 betrachtet.

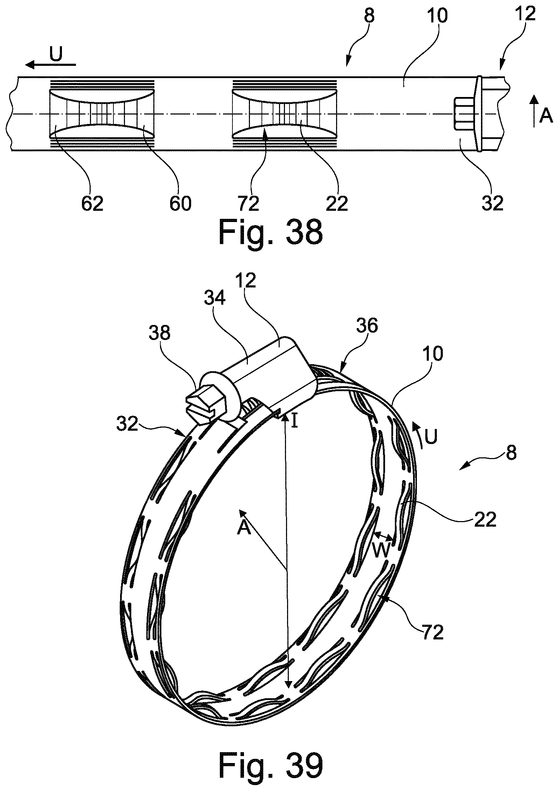

Eine weitere bevorzugte Ausgestaltung einer Lasche 22 ist in Figur 38 dargestellt. Wie zuvor werden auf die Erläuterungen der vorherigen Figuren 31 bis 34 Bezug genommen, soweit es sinnvoll ist. Die gezeigten Laschen 22 sind mit zumindest einer ihrer Außenkanten 72 tailliert ausgestaltet. Mit einer derartigen Lasche 22 lassen sich für den jeweiligen Anwendungsfall bevorzugte Federcharakteristika erzeugen. Entsprechendes gilt im Übrigen für die zuvor genannten, wellenförmigen oder trapezförmigen Laschen 22. Einzeln oder in Kombination miteinander können somit eine lineare Federkennlinie, ein degressive Federkennlinie, ein progressive Federkennlinie oder eine Kombination der zuvor genannten Federkennlinie - zum Beispiel nach Art eines Knackfrosches - erzeugt werden.

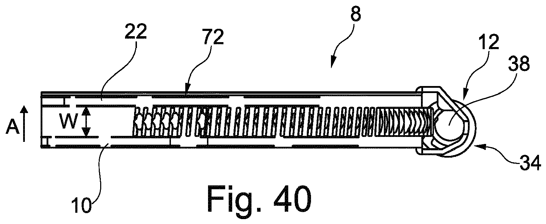

Aus einer Zusammenschau der Figuren 39 und 40 ist eine weitere Ausgestaltung der Schelle 8, nämlich eine Schneckengewindeschelle 8, zu entnehmen. Soweit es sinnvoll ist, wird auf die Erläuterungen zu den Figuren 31-34 Bezug genommen. Abweichend von diesen Erläuterungen ist es vorgesehen, dass die Laschen 22 in Axialrichtung A der Schelle 8 mit einem Abstand W voneinander beanstandet sind, um in dem Bereich zwischen den Laschen 22 treppenartige Gewindeerhebungen und/oder Gewindeversenkungen vorzusehen. Die Gewindeerhebungen bzw. Gewindeversenkung können mit einem Gewinde einer in das Gehäuse 34 eingefassten Gewindeschraube 38 zusammenwirken, um den Innendurchmesser I der Schelle 8 einzustellen. Die Laschen 22 können, wie in den Fig.39 und 40 dargestellt, an den Stirnseiten des Schellenbands 10 angeordnet sein. Mit einer Anordnung der Gewindeerhebungen bzw. Gewindeversenkung zwischen den Laschen 22 ist es möglich, die Schelle 8 in Axialrichtung besonders kompakt auszugestalten. Darüber hinaus erlaubt diese Ausgestaltung, dass die Laschen 22 zumindest im Wesentlichen über den gesamten Umfang des Schellenbands 10 angeordnet werden können, da sie sich auch seitlich zu den Gewindeerhebungen bzw. Gewindeversenkung erstrecken. Somit kann die Schelle 8 mit besonders vielen Laschen 22 ausgestattet sein, um Durchmesserveränderungen des Schlauchs 4 aufgrund von Temperaturschwankungen besonders wirkungsvoll zu kompensieren. Um die Kompaktheit der Schelle 8 noch weiter zu erhöhen, ist es möglich, dass die Laschen 22 jeweils mit einer ihrer Außenkanten 72 einen Teil der jeweiligen Stirnseite des Schellenbands 10 bilden. In diesem Fall sind die stirnseitigen Ringabschnitte des Schellenbands von den Laschen 22 unterbrochen.

### Bezugszeichenliste

### (Teil der Beschreibung)

- A: Axialrichtung
- B: Breite
- C: Abstand
- D: Breite
- I: Innendurchmesser
- K: Spannkraft
- L: Längsrichtung
- M: Materialstärke
- N: Längsachse
- R: Radialrichtung
- S: Schelleninnendurchmesser
- T: Zeit
- U: Umfangsrichtung
- W: Abstand
- 2: Schellenanordnung
- 4: Schlauch
- 6: Rohr, Stutzen
- 8: Schelle
- 10: Schellenband
- 12: Schellenbandspanneinheit
- 14: Einsatzteil
- 16: Band
- 18: Federn
- 20: Ringraum
- 22: Laschen
- 22a: Laschen
- 22b: Laschen
- 24: Gruppe
- 32: erster Endabschnitt
- 34: Gehäuse
- 36: zweiter Endabschnitt
- 38: Gewindeschraube
- 40: Mittelabschnitt
- 42: Überlappungsstelle
- 44: Endabschnitt
- 46: Endabschnitt
- 48: Überlappungsstelle
- 50: Ringabschnitt
- 52: Ausnehmung
- 54: Ausstanzung
- 56: Steg
- 58: Gewindespanneinheit
- 60: erster Endabschnitt
- 62: zweiter Endabschnitt
- 64: erster Ringbereich
- 66: zweiter Ringbereich
- 68: Bogenabschnitt
- 70: Steg
- 72: Außenkante
- 74: Schlitz
- 76: Zwischenraum

## Patentansprüche

1. Schellenanordnung (2) zur Befestigung eines Schlauches (4) auf einem Rohr (6) oder Stutzen (6), umfassend
- eine Schelle (8) mit einem ringförmigen Schellenband (10) und einer Schellenbandspanneinheit (12), und
- ein koaxial in das Schellenband (10) eingesetztes Einsatzteil (14), das als ringförmiges Band (16) ausgebildet ist, wobei
- mehrere Federn (18) über einen Umfang des Schellenbandes (10) verteilt sind, wobei die Federn (18) radialwirkend sind und so angeordnet sind, dass sie zwischen dem Schellenband (10) und dem Einsatzteil (14) liegen und das Einsatzteil (14) als ringförmiges Band (16) ausgebildet ist, deren Endabschnitte (44, 46) an einer Überlappungsstelle (48) überlappen und nicht miteinander verbunden sind, so dass das ringförmige Band (16) durch tangentiale Verschiebung seiner Endabschnitte (44, 46) an der Überlappungsstelle (48) im Durchmesser veränderbar ist und so die Federkraft zwischen dem Schellenband (10) und dem Einsatzteil (14) zur Wirkung kommt.

2. Schellenanordnung (2) nach dem vorhergehenden Anspruch, **dadurch gekennzeichnet, dass** die Federn (18) gleichmäßig über den Umfang des Schellenbands (10) verteilt angeordnet sind.

3. Schellenanordnung (2) nach einem der vorhergehenden Ansprüche, **dadurch gekennzeichnet, dass** die Federn (18) jeweils einen Ringraum (20) durchquerend ausgestaltet sind, der zwischen dem Schellenband (10) und den Einsatzteil (14) ausgebildet ist.

4. Schellenanordnung (2) nach einem der vorhergehenden Ansprüche, **dadurch gekennzeichnet, dass** das Schellenband (10) und bzw. oder das Einsatzteil (14) aus Metall, insbesondere Federstahl, sind.

5. Schellenanordnung (2) nach einem der vorhergehenden Ansprüche, **dadurch gekennzeichnet, dass** die Federn (18) zumindest teilweise von dem Schellenband (10) gebildet sind.

6. Schellenanordnung (2) nach einem der vorhergehenden Ansprüche, **dadurch gekennzeichnet, dass** die Federn (18) durch schräg zur Radialrichtung (R) von dem Schellenband (10) nach innen ragende Laschen (22) gebildet sind.

7. Schellenanordnung (2) nach einem der vorhergehenden Ansprüche 1 bis 5, **dadurch gekennzeichnet, dass** die Federn (18) durch von dem Schellenband (10) radial nach innen gewölbte Laschen (22) gebildet sind.

8. Schellenanordnung (2) nach einem der vorhergehenden Ansprüche 1 bis 4, **dadurch gekennzeichnet, dass** die Federn (18) zumindest teilweise von dem Einsatzteil (14) gebildet sind.

9. Schellenanordnung (2) nach einem der vorhergehenden Ansprüche 1 bis 4 oder 8, **dadurch gekennzeichnet, dass** die Federn (18) durch schräg zur Radialrichtung (R) von dem Einsatzteil (14) nach außen ragende Laschen (22) gebildet sind.

10. Schellenanordnung (2) nach einem der vorhergehenden Ansprüche 1 bis 4 oder 8, **dadurch gekennzeichnet, dass** die Federn (18) durch von dem Einsatzteil (14) radial nach außen gewölbte Laschen (22) gebildet sind.

11. Schellenanordnung (2) nach einem der vorhergehenden Ansprüche 6, 7, 9 oder 10, **dadurch gekennzeichnet, dass** jede Lasche (22) mit einem Endabschnitt (60) oder mit zwei einander gegenüber angeordneten Endabschnitten (60, 62) mit dem Schellenband (10) bzw. dem Einsatzteil (14) verbunden ist.

12. Schellenanordnung (2) nach einem der vorhergehenden Ansprüche 6, 7, 9, 10 oder 11, **dadurch gekennzeichnet, dass** die Laschen (22) jeweils, vorzugsweise axial mittig, aus dem Schellenband (10) bzw. dem Einsatzteil (14) gestanzt und/oder gebogen sind.

13. Schellenanordnung (2) nach einem der vorhergehenden Ansprüche 6, 9, 11 oder 12, **dadurch gekennzeichnet, dass** die Laschen (22) in Umfangsrichtung (U), insbesondere periodisch, den gleichen Zeigesinn aufweisen.

14. Schellenanordnung (2) nach einem der vorhergehenden Ansprüche 6, 7 oder 9 bis 12, **dadurch gekennzeichnet, dass** jeweils zwei benachbarte Laschen (18), die jeweils mit einem Endabschnitt (60, 62) mit dem Schellenband (10) bzw. dem Einsatzteil (14) verbunden sind, zu einer Gruppe (24) gruppiert sind, und die Laschen (18) der jeweiligen Gruppe (24) zueinander zeigen.

15. Verbindungsanordnung, umfassend
- ein Rohr (6) oder Stutzen (6) mit einem Rohr- bzw. Stutzenendabschnitt und
- ein Schlauch (4) mit einem Schlauchendabschnitt,
- wobei der Schlauchendabschnitt auf den Rohr- bzw. Stutzenendabschnitt aufgesteckt ist,
**dadurch gekennzeichnet, dass**
- der Schlauchendabschnitt mittels einer Schellenanordnung (2) nach einem der vorhergehenden Ansprüche kraftschlüssig auf dem Rohr- bzw. Stutzenendabschnitt befestigt ist.

## Claims

1. Clamp arrangement (2) for fastening a hose (4) to a pipe (6) or to a connecting piece (6), comprising
- a clamp (8) having an annular clamp band (10) and a clamp band-tensioning unit (12), and
- an insert part (14) which is inserted coaxially into the clamp band (10) and which is designed as an annular band (16), wherein
- multiple springs (18) are distributed over a circumference of the clamp band (10), wherein the springs act radially and are arranged in such a way that they are situated between the clamp band (10) and the insert part (14), and the insert part (14) is formed as an annular band (16) whose end portions (44, 46) overlap at a point of overlap (48) and are not connected to one another, so that the annular band (16) is variable in diameter by way of tangential displacement of its end portions (44, 46) at the point of overlap (48) and, in this way, the spring force between the clamp band (10) and the insert part (14) comes into effect.

2. Clamp arrangement (2) according to the preceding claim, **characterized in that** the springs (18) are arranged so as to be distributed uniformly over the circumference of the clamp band (10).

3. Clamp arrangement (2) according to either of the preceding claims, **characterized in that** the springs (18) are each configured so as to pass through an annular space (20) which is formed between the clamp band (10) and the insert part (14).

4. Clamp arrangement (2) according to one of the preceding claims, **characterized in that** the clamp band (10) and/or the insert part (14) are/is composed of metal, in particular spring steel.

5. Clamp arrangement (2) according to one of the preceding claims, **characterized in that** the springs (18) are formed at least in part by the clamp band (10) .

6. Clamp arrangement (2) according to one of the preceding claims, **characterized in that** the springs (18) are formed by tongues (22) which project inwardly from the clamp band (10) obliquely to the radial direction (R).

7. Clamp arrangement (2) according to one of the preceding Claims 1 to 5, **characterized in that** the springs (18) are formed by tongues (22) which are curved radially inwardly from the clamp band (10).

8. Clamp arrangement (2) according to one of the preceding Claims 1 to 4, **characterized in that** the springs (18) are formed at least in part by the insert part (14).

9. Clamp arrangement (2) according to one of the preceding Claims 1 to 4 or 8, **characterized in that** the springs (18) are formed by tongues (22) which project outwardly from the insert part (14) obliquely to the radial direction (R).

10. Clamp arrangement (2) according to one of the preceding Claims 1 to 4 or 8, **characterized in that** the springs (18) are formed by tongues (22) which are curved radially outwardly from the insert part (14) .

11. Clamp arrangement (2) according to one of the preceding Claims 6, 7, 9 or 10, **characterized in that** each tongue (22) is connected by an end portion (60), or by two mutually oppositely arranged end portions (60, 62), to the clamp band (10) or to the insert part (14).

12. Clamp arrangement (2) according to one of the preceding Claims 6, 7, 9, 10 or 11, **characterized in that** the tongues (22) are each punched out and/or bent, preferably in an axially central manner, from the clamp band (10) or the insert part (14).

13. Clamp arrangement (2) according to one of the preceding Claims 6, 9, 11 or 12, **characterized in that** the tongues (22), in the circumferential direction (U), in particular periodically, have the same sense of orientation.

14. Clamp arrangement (2) according to one of the preceding Claims 6, 7 or 9 to 12, **characterized in that** in each case two adjacent tongues (18), which are each connected by an end portion (60, 62) to the clamp band (10) or to the insert part (14), are grouped into a group (24), and the tongues (18) of the respective group (24) point to one another.

15. Connection arrangement comprising,
- a pipe (6) or connecting piece (6) having a pipe end portion or connecting-piece end portion, and
- a hose (4) having a hose end portion,
- wherein the hose end portion is plugged onto the pipe end portion or connecting-piece end portion,
**characterized in that**
- the hose end portion is fastened to the tube end portion or connecting-piece end portion in a force-fitting manner by means of a clamp arrangement (2) according to one of the preceding claims.

## Revendications

1. Système de collier (2) pour la fixation d'un tuyau souple (4) sur un tube (6) ou un manchon (6), comprenant
- un collier (8) doté d'une bande de collier annulaire (10) et d'une unité de serrage (12) de la bande de collier, et
- une pièce d'insertion (14) introduite coaxialement dans la bande de collier (10), laquelle pièce d'insertion est réalisée en forme de bande annulaire (16), dans lequel
- plusieurs ressorts (18) sont répartis sur une périphérie de la bande de collier (10), dans lequel les ressorts (18) agissent radialement et sont disposés de telle sorte qu'ils sont situés entre la bande de collier (10) et la pièce d'insertion (14) et la pièce d'insertion (14) est réalisée en forme de bande annulaire (16) dont les parties d'extrémité (44, 46) se chevauchent au niveau d'un point de chevauchement (48) et ne sont pas reliées l'une à l'autre, de sorte que la bande annulaire (16) soit de diamètre variable par déplacement tangentiel de ses parties d'extrémité (44, 46) au niveau du point de chevauchement (48) et que la force de ressort agisse ainsi entre la bande de collier (10) et la pièce d'insertion (14).

2. Système de collier (2) selon la revendication précédente, **caractérisé en ce que** les ressorts (18) sont disposés de manière répartie uniformément sur la périphérie de la bande de collier (10).

3. Système de collier (2) selon l'une des revendications précédentes, **caractérisé en ce que** les ressorts (18) sont configurés de façon à traverser respectivement un espace annulaire (20), qui est formé entre la bande de collier (10) et la pièce d'insertion (14) .

4. Système de collier (2) selon l'une des revendications précédentes, **caractérisé en ce que** la bande de collier (10) et/ou la pièce d'insertion (14) sont en métal, en particulier en acier à ressort.

5. Système de collier (2) selon l'une des revendications précédentes, **caractérisé en ce que** les ressorts (18) sont formés au moins partiellement par la bande de collier (10).

6. Système de collier (2) selon l'une des revendications précédentes, **caractérisé en ce que** les ressorts (18) sont formés par des lamelles (22) faisant saillie vers l'intérieur à partir de la bande de collier (10) de manière oblique par rapport à la direction radiale (R).

7. Système de collier (2) selon l'une des revendications précédentes 1 à 5, **caractérisé en ce que** les ressorts (18) sont formés par des lamelles (22) bombées radialement vers l'intérieur à partir de la bande de collier (10).

8. Système de collier (2) selon l'une des revendications précédentes 1 à 4, **caractérisé en ce que** les ressorts (18) sont formés au moins partiellement par la pièce d'insertion (14).

9. Système de collier (2) selon l'une des revendications précédentes 1 à 4 ou 8, **caractérisé en ce que** les ressorts (18) sont formés par des lamelles (22) faisant saillie vers l'extérieur à partir de la pièce d'insertion (14) de manière oblique par rapport à la direction radiale (R).

10. Système de collier (2) selon l'une des revendications précédentes 1 à 4 ou 8, **caractérisé en ce que** les ressorts (18) sont formés par des lamelles (22) bombées radialement vers l'extérieur à partir de la pièce d'insertion (14).

11. Système de collier (2) selon l'une des revendications précédentes 6, 7, 9 ou 10, **caractérisé en ce que** chaque lamelle (22) est reliée à la bande de collier (10) ou à la pièce d'insertion (14) par une partie d'extrémité (60) ou par deux parties d'extrémité (60, 62) disposées en regard l'une de l'autre.

12. Système de collier (2) selon l'une des revendications précédentes 6, 7, 9, 10 ou 11, caractérisé en ce les lamelles (22) sont respectivement découpées et/ou cintrées, de préférence centralement axialement, à partir de la bande de collier (10) ou de la pièce d'insertion (14).

13. Système de collier (2) selon l'une des revendications précédentes 6, 9, 11 ou 12, caractérisé en ce les lamelles (22) présentent le même sens d'orientation, en particulier périodiquement, dans la direction périphérique (U).

14. Système de collier (2) selon l'une des revendications précédentes 6, 7 ou 9 à 12, caractérisé en ce respectivement deux lamelles (18) adjacentes qui sont reliées respectivement par une partie d'extrémité (60, 62) à la bande de collier (10) ou à la pièce d'insertion (14) sont groupées en un groupe (24), et les lamelles (18) du groupe (24) respectif sont tournées l'une vers l'autre.

15. Système d'assemblage, comprenant
- un tube (6) ou un manchon (6) comprenant une partie d'extrémité de tube ou de manchon, et
- un tuyau souple (4) doté d'une partie d'extrémité de tuyau souple,
- dans lequel la partie d'extrémité de tuyau souple est enfichée sur la partie d'extrémité de tube ou de manchon,
**caractérisé en ce que**
- la partie d'extrémité de tuyau souple est fixée à force sur la partie d'extrémité de tube ou de manchon au moyen d'un système de collier (2) selon l'une des revendications précédentes.
